# EUROPEAN PATENT APPLICATION

(11) **EP 4 794 423 A1**
(43) Date of publication of application: **19.08.2026**
(21) Application number: 24877062.0
(22) Date of filing: 01.10.2024
(51) Int. Cl.: H04W 72/23, H04W 36/08, H04W 52/18, H04W 74/08

(54) **TERMINAL, WIRELESS COMMUNICATION METHOD, AND BASE STATION**

(30) Priority: 10.10.2023 JP 2023175100
(71) Applicant: NTT DOCOMO, INC., Tokyo 100-6150 (JP)
(72) Inventor: OKUMURA, Mamoru, Tokyo 100-6150 (JP); MATSUMURA, Yuki, Tokyo 100-6150 (JP); HARADA, Hiroki, Tokyo 100-6150 (JP); WANG, Jing, Beijing 100190 (CN)
(74) Representative: Hoffmann Eitle
(86) International application number: PCT/JP2024/035140
(87) International publication number: WO 2025/079464

(57) **Abstract**

A terminal according to one aspect of the present disclosure includes a receiving section that receives a downlink control channel (PDCCH) order for a certain candidate cell, and a control section that determines, based on the PDCCH order, to perform power ramping for random access channel (PRACH) transmission. The control section sets a preamble power ramping counter to 1 except when the PDCCH order indicates a serving cell as a candidate cell for L1/L2 inter-cell mobility (LTM).

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)", "5G+ (plus)", "6th generation mobile communication system (6G)", "New Radio (NR)", "3GPP Rel. 15 (or later versions)", and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

It is assumed that, in future radio communication systems (for example, radio communication systems of Rel. 16/5G or later), communication is controlled based on inter-cell mobility with a plurality of cells including a non-serving cell or inter-cell mobility using a plurality of transmission/reception points (for example, multi-TRP (MTRP)). It is also assumed that, in inter-cell mobility, a candidate cell is configured separately from a serving cell, and switching/switch between the serving cell and the candidate cell is performed.

Incidentally, for a random access procedure related to cell switching, it is studied that a UE determines whether to perform power ramping (which may be referred to as electric power ramping) for PRACH transmission, based on a PDCCH order.

For example, it is assumed that, in a case where random access response (RAR) reception is not configured, a plurality of RACH procedures (RACH transmissions) are performed in parallel. In this case, it remains unclear how power ramping for each RACH transmission is maintained. Unless these are clear, an appropriate random access procedure fails, which may result in reduction in communication throughput.

The present disclosure has been made in view of this respect, and an object of the present disclosure is to provide a terminal, a radio communication method, and a base station that enable appropriate control of power ramping in mobility.

### Solution to Problem

A terminal according to one aspect of the present disclosure includes a receiving section that receives a downlink control channel (PDCCH) order for a certain candidate cell, and a control section that determines, based on the PDCCH order, to perform power ramping for random access channel (PRACH) transmission. The control section sets a preamble power ramping counter to 1 except when the PDCCH order indicates a serving cell as a candidate cell for L1/L2 inter-cell mobility (LTM).

### Advantageous Effects of Invention

According to one aspect of the present disclosure, it is possible to appropriately control power ramping in mobility.

### Brief Description of Drawings

[FIG. 1] FIG. 1A is a diagram to show an example of movement of a UE in Rel. 17. FIG. 1B is a diagram to show an example of movement of a UE in Rel. 18.
[FIG. 2] FIG. 2 is a diagram to show an example of LTM procedure.
[FIG. 3] FIG. 3 is a diagram to show an example of comparison between L3 handover and Rel-18 LTM.
[FIG. 4] FIG. 4 is a diagram to show an example of association between a serving cell and a candidate cell.
[FIG. 5] FIG. 5A is a diagram to show a first example of option 2 for candidate cell configuration. FIG. 5B is a diagram to show a second example of option 2 for the candidate cell configuration.
[FIG. 6] FIG. 6 is a diagram to show example 1 of serving cell switching.
[FIG. 7] FIG. 7 is a diagram to show example 2 of serving cell switching.
[FIG. 8] FIG. 8 is a diagram to show example 3 of serving cell switching.
[FIG. 9] FIG. 9 is a diagram to show an outline of L1L2-triggered mobility (LTM).
[FIG. 10] FIG. 10 is a diagram to show a PDCCH indication-based RACH (PDCCH ordered RACH) with random access response (RAR) monitoring for a serving cell.
[FIG. 11] FIG. 11 is a diagram to show a PDCCH indication-based RACH (PDCCH ordered RACH) without random access response (RAR) monitoring for a candidate cell.
[FIG. 12] FIG. 12 is a diagram to show DCI format 1_0 CRC-scrambled by a C-RNTI.
[FIG. 13] FIG. 13 is a diagram to show an example of distinction between RACH procedures.
[FIG. 14] FIG. 14 is a diagram to show an example of DCI format 1_0 (DCI field).
[FIG. 15] FIG. 15 is a diagram to show an example of LTM configuration according to a first embodiment.
[FIG. 16] FIG. 16 is a diagram to show another example of the LTM configuration according to the first embodiment.
[FIG. 17] FIG. 17 is a diagram to show an example of power ramping procedure according to the first embodiment.
[FIG. 18] FIG. 18 is a diagram to show another example of the power ramping procedure according to the first embodiment.
[FIG. 19] FIG. 19 is a diagram to show another example of the power ramping procedure according to the first embodiment.
[FIG. 20] FIG. 20 is a diagram to show an example of operation between a UE and a specific cell according to the first embodiment.
[FIG. 21] FIG. 21 is a diagram to show another example of the operation between the UE and the specific cell according to the first embodiment.
[FIG. 22] FIG. 22 is an example of description of a specification related to random access procedure initialization according to a third embodiment.
[FIG. 23] FIG. 23 is another example of the description of the specification related to random access procedure initialization according to the third embodiment.
[FIG. 24] FIG. 24 is a diagram to show an example of a schematic structure of a radio communication system according to one embodiment.
[FIG. 25] FIG. 25 is a diagram to show an example of a structure of a base station according to one embodiment.
[FIG. 26] FIG. 26 is a diagram to show an example of a structure of a user terminal according to one embodiment.
[FIG. 27] FIG. 27 is a diagram to show an example of a hardware structure of the base station and the user terminal according to one embodiment.
[FIG. 28] FIG. 28 is a diagram to show an example of a vehicle according to one embodiment.

### Description of Embodiments

### (TCI, Spatial Relation, QCL)

For NR, control of reception processing (for example, at least one of reception, de-mapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may mean that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between the plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be used interchangeably with sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a reference signal for demodulation (DeModulation Reference Signal (DMRS)), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (L1/L2 Inter-Cell Mobility)

As described above, it is studied that the UE performs UL transmission to one or a plurality of cells/TRPs. As a procedure in this case, scenario 1 or scenario 2 below is considered. Note that, in the present disclosure, a serving cell may be used interchangeably with a TRP in the serving cell. Layer 1/layer 2 (L1/L2) and DCI/Medium Access Control Control Element (MAC CE) may be used interchangeably. In the present disclosure, a physical cell ID (Physical Cell Identity (PCI)) different from the PCI of the current serving cell may be simply referred to as a "different PCI". A non-serving cell, a cell having a different PCI, and an additional cell may be used interchangeably.

### <Scenario 1>

Scenario 1 corresponds to, for example, inter-cell mobility for multi-TRP, but may be a scenario not corresponding to inter-cell mobility for multi-TRP.
(1) The UE receives, from the serving cell, a configuration of an SSB for beam measurement of a TRP corresponding to a different PCI from the serving cell and a configuration necessary for using radio resources for data transmission and reception, including resources of the different PCI.
(2) The UE performs beam measurement of the TRP corresponding to the different PCI, and reports beam measurement results to the serving cell.
(3) Based on the above report, the transmission configuration indication (TCI) state associated with the TRP corresponding to the different PCI is activated by L1/L2 signaling from the serving cell.
(4) The UE performs transmission and reception by using a UE-dedicated channel on the TRP corresponding to the different PCI.
(5) The UE needs to invariably cover the serving cell, including a case of the multi-TRP. Similarly to a conventional system, the UE needs to use a common channel (a broadcast control channel (BCCH), a paging channel (PCH)) and the like from the serving cell.

In scenario 1, when the UE transmits and receives an additional cell/TRP (a TRP corresponding to a PCI of the additional cell) and a signal, the serving cell (assumption of the serving cell in the UE) is not changed. The UE is configured with a higher layer parameter related to the PCI of the non-serving cell from the serving cell. Scenario 1 may be applied in Rel. 17, for example.

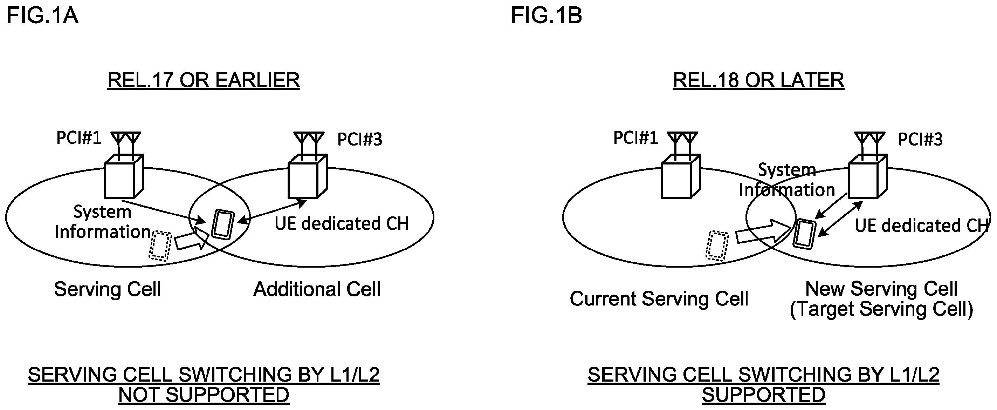

FIG. 1A is a diagram to show an example of movement of the UE in Rel. 17. A case is assumed in which the UE moves from a cell (serving cell) of PCI #1 to a cell (additional cell) (overlapping the serving cell) of PCI #3. In this case, in Rel. 17, switching of the serving cells by L1/L2 is not supported.

The additional cell is a cell having an additional PCI different from the PCI of the serving cell. The UE can receive/transmit a UE-dedicated channel from the additional cell. The UE needs to be present within coverage of the serving cell in order to receive a UE common channel (for example, system information/paging/short message). When the UE moves out of coverage of the serving cell, switching of cells is required through handover (also referred to as L3 mobility) or the like.

### <Scenario 2>

In scenario 2, L1/L2 inter-cell mobility is applied. In L1/L2 inter-cell mobility, the serving cell can be changed by using a function such as beam control without performing RRC reconfiguration. In other words, transmission and reception to and from an additional cell can be performed without performing handover. For handover, RRC reconnection is required, which generates a period in which data communication cannot be performed, and thus by applying L1/L2 inter-cell mobility that does not require handover, data communication can be continued even at the time of the serving cell change. Scenario 2 may be applied in Rel. 18, for example. In scenario 2, for example, the following procedure is performed.
(1) The UE receives, from the serving cell, a configuration of an SSB for a cell (additional cell) having a different PCI for beam measurement/serving cell change.
(2) The UE performs beam measurement of the cell using the different PCI, and reports measurement results to the serving cell.
(3) The UE may receive a configuration (serving cell configuration) of the cell having the different PCI by higher layer signaling (for example, RRC). In other words, a preconfiguration related to serving cell change may be performed. The configuration may be performed together with or may be performed separately from the configuration in (1).
(4) Based on the above report, the TCI state of the cell having the different PCI may be activated by L1/L2 signaling according to the serving cell change. The TCI state activation and the serving cell change may be separately performed.
(5) The UE changes the serving cell (assumption of the serving cell), and starts reception/transmission by using a pre-configured UE-dedicated channel and the TCI state.

In other words, in scenario 2, the serving cell (assumption of the serving cell in the UE) is updated by L1/L2 signaling. Scenario 2 may be applied in Rel. 18.

FIG. 1B is a diagram to show an example of movement of the UE in Rel. 18. In Rel. 18, the serving cell is switched by L1/L2 (for example, DCI/MAC CE). The UE can receive/transmit a UE-dedicated channel/common channel from/to a new serving cell (or a target serving cell). The UE may go out of the coverage of the current serving cell.

### <L1L2-Triggered Mobility (LTM) Procedure>

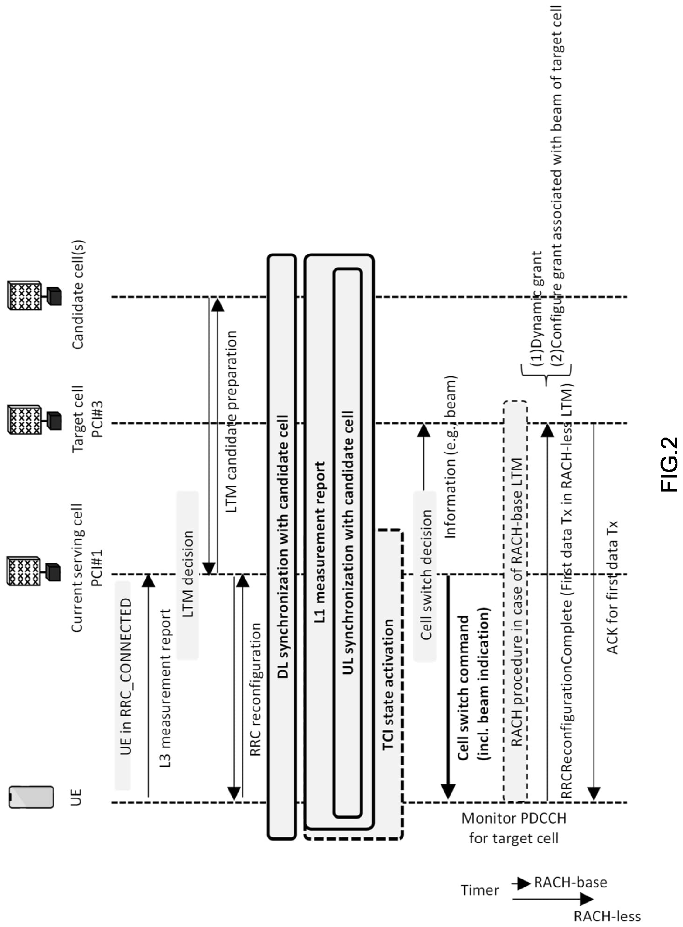

FIG. 2 is a diagram to show an example of LTM procedure. Note that L1/L2 inter-cell mobility and L1L2-triggered mobility (LTM) may be used interchangeably. Note that the procedure of FIG. 2 may be procedure corresponding to scenario 2 above. Respective procedures of FIG. 2 will be described below.

The UE performs RRC connection to the current serving cell (PCI #1), and transmits an L3 measurement report. The serving cell (base station) determines performance of LTM, based on the L3 measurement report, and performs preparation for the LTM with candidate cells. The UE and the serving cell perform RRC reconfiguration. Note that the candidate cells may include a target cell (PCI #3).

The UE, the serving cell, the target cell, and the candidate cell perform DL synchronization. The UE performs L1 (for example, L1-RSRP/SINR) measurement for the serving cell/candidate cell/target cell and reports the measurement. The UE, the serving cell, the target cell, and the candidate cell perform UL synchronization.

The serving cell determines, based on the L1 measurement report, performance of a switch of the serving cell to the target cell (PCI #3), and transmits a cell switch command to the UE. After receiving the cell switch command, the UE starts PDCCH monitoring for the target cell.

In a case of RACH-based LTM, the UE performs a RACH procedure for the target cell. In a case of RACH-less LTM, the UE transmits an RRC reconfiguration complete message and transmits the first data to the target cell. The transmission of the first data is performed based on a dynamic grant or a configured grant associated with a beam of the target cell. The target cell transmits, to the UE, an ACK for the transmission.

### <Reduction of Interruption Time>

In Rel-18 L1/L2 inter-cell mobility (for example, scenario 2 above), the UE can reduce a time without data transmission (interruption time). Applying Rel-18 LTM can reduce the time without data transmission (interruption time) as compared with a method of handover based on an L3 measurement result (L3 handover). Respective specific processings will be described below.

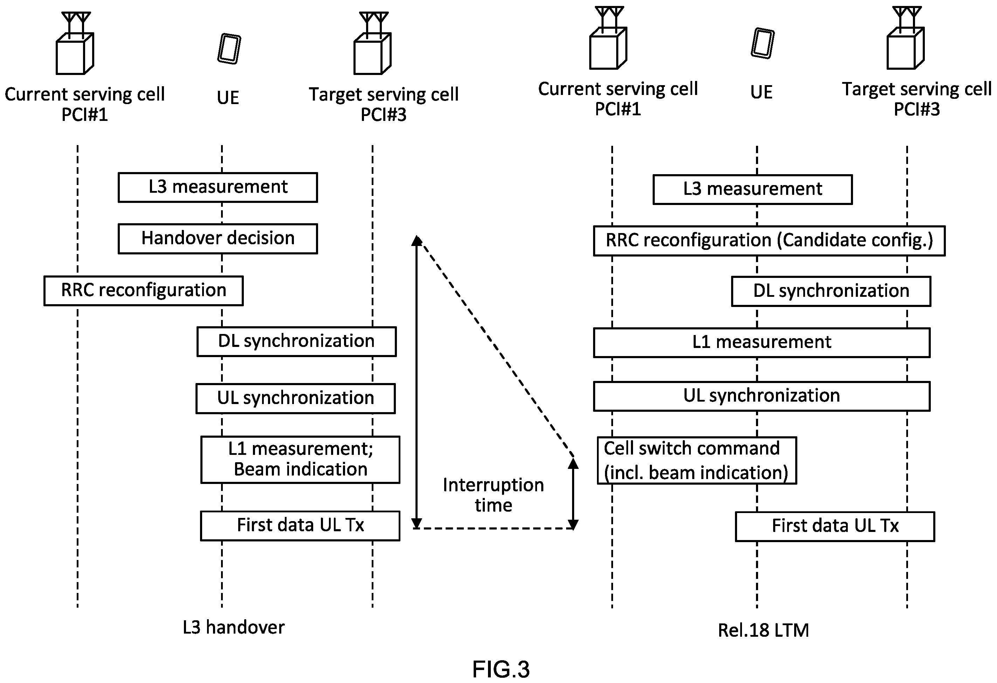

FIG. 3 is a diagram to show an example of comparison between the L3 handover and the Rel-18 LTM. In a case of the L3 handover, the UE first performs L3 measurement, and determines to perform handover, based on a result of the measurement. Then, the UE and a current serving cell perform RRC reconfiguration. Then, the UE performs DL synchronization and UL synchronization with a target serving cell. The UE performs L1 measurement/reporting for the target serving cell, and transmits the first UL data to the target serving cell after receiving a beam indication. In this case, the UE does not perform UL data transmission during the period from the determination of the handover to the transmission of the first UL data (interruption time).

In a case of the Rel-18 LTM, the UE first performs L3 measurement. Then, the UE, the current serving cell, and the target serving cell perform RRC reconfiguration. Then, the UE performs DL synchronization with the target serving cell. Then, the UE performs L1 measurement/reporting for the current serving cell and the target serving cell, and performs UL synchronization. Then, the current serving cell transmits, to the UE, a cell switch command (including a beam indication) via L1/L2 (DCI/MAC CE). Then, the UE transmits the first UL data to the target serving cell. In this case, the period from reception of the cell switch command to the transmission of the first UL data is an interruption time for the UL transmission, but the interruption time is shorter than that of the case of the L3 handover.

### (Configuration of Plurality of Candidate Cells)

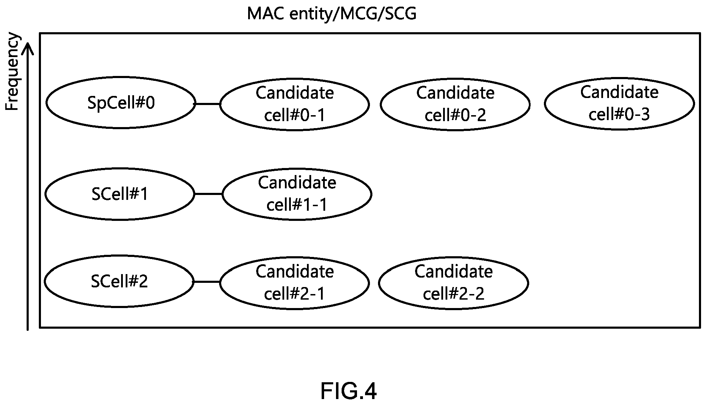

FIG. 4 is a diagram to show an example of association between the serving cell and a candidate cell. Assume that SpCell #0, SCell #1, or SCell #2 is the serving cell. Note that the SpCell means a special cell (including a primary cell (PCell) and a primary secondary cell (PSCell)). The SCell means a secondary cell. SpCell #0 is associated with candidate cell #0-1, candidate cell #0-2, and candidate cell #0-3. SCell #1 is associated with candidate cell #1-1. SCell #2 is associated with candidate cells #2-1 and #2-2. In this manner, one or more candidate cells (candidate serving cells) may be associated with the serving cell.

For configuration of cells as candidates (candidate cells) when the serving cell is changed, options 1 and 2 below are considered, for example.

### <Option 1>

As in inter-cell mobility of Rel. 17, information in a serving cell configuration (ServingCellConfig) may include information related to a plurality of candidate cells. This case requires that the plurality of candidate cells share the same configuration of a PDCCH/PDSCH/UL or the like as that for the serving cell.

For example, in the inter-cell mobility of Rel. 17, "mimoParam-r17" is added within the serving cell configuration (ServingCellConfig) to add PCI configuration information. mimoParam-r17 may include additionalPCI-ToAddModList-r17 as an information list of additional SSBs having PCIs different from a PCI of the serving cell. The same configuration as that for the serving cell may be applied to the candidate cells (additional cells, cells with additionalPCI), except for some information.

### <Option 2>

A plurality of candidate cells may be provided with a full configuration (for example, ServingCellConfig) corresponding to the respective cells, and may be associated with each serving cell by reusing a carrier aggregation (CA) configuration framework. In other words, the candidate cells may not share configuration information with the serving cell, and may be provided with another configuration. The UE is provided with a full configuration for the respective candidate cells, and thus can perform appropriate communication with the candidate cell.

The CA configuration framework can configure an SpCell and add a plurality of SCells, for each cell group. Reusing the CA framework may configure a serving cell and configure a plurality of candidate cells, for each cell group for L1/L2 inter-cell mobility. The candidate cells may be activated/deactivated by a MAC CE. The MAC CE may activate/deactivate TCI information corresponding to the candidate cells to activate/deactivate the candidate cells. It is considered that this method is beneficial for reducing complexity of UE operation.

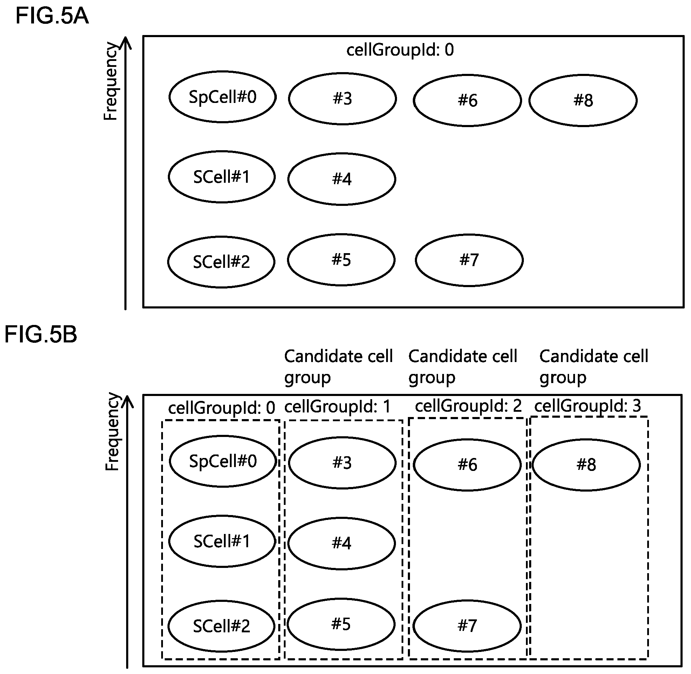

FIG. 5A is a diagram to show a first example of option 2 for the candidate cell configuration. In the example of FIG. 5A, a common candidate cell pool for cell switching in an MCG/SCG is applied to candidate cells. In other words, the candidate cells are handled as one pool (group) irrespective of a frequency band.

FIG. 5B is a diagram to show a second example of option 2 for the candidate cell configuration. In the example of FIG. 5B, a plurality of cell groups are configured, and cell group switching can be performed by L1/L2 signaling. Candidate cell(s) is configured for each cell group, and a configuration of each group includes indices of corresponding SpCell and SCell.

### (Signaling for Serving Cell Change Indication)

Implicit or explicit signaling for serving cell change indication will be described.

### {Aspect 1}

In aspect 1, implicit signaling for serving cell change indication will be described.

### {{Option 1-1}}

When a specific control resource set (CORESET) (for example, at least one of CORESET #0, a CORESET with a CH5 Type 0-CSS, and a CORESET with a CH6/CH7/CH8 CSS) is indicated (activated) by a MAC CE, together with one or more TCI states associated with a cell with a PCI different from a PCI of a serving cell (when, for the specific CORESET, one or more TCI states associated with a cell with a PCI different from the PCI of the serving cell are indicated/activated by the MAC CE), the UE may determine to change the serving cell to another cell (cell x, cell having a different PCI). In other words, this activation may implicitly indicate that the serving cell is changed to another cell.

In this case, the UE may update, to the same TCI state as the activated TCI state above, a beam for another CORESET ID, another CORESET using CH6/CH7/CH8, or another CORESET using a CSS.

### {{Option 1-2}}

In a case where, when the MAC CE activates/deactivates PDSCH TCI states, all the TCI states activated by the MAC CE are associated with same cell x having a PCI different from the PCI of the serving cell, the UE may determine to change the serving cell to another cell (cell x). In other words, this association may implicitly indicate that the serving cell is changed to another cell.

In a case where this option is applied, when a NW (base station) changes no serving cell, it is necessary that, when the MAC CE activates PDSCH TCI states associated with a cell having a different PCI, a TCI state associated with another cell (for example, a current serving cell or a cell having a second different PCI) be also included in the activation.

### {{Option 1-3}}

In a case where the MAC CE activates/deactivates unified TCI states (corresponding to a unified TCI framework of Rel. 17, for example) and where all the activated unified TCI states are associated with same cell x having a different PCI, the UE may determine to change the serving cell to another cell (cell x). In other words, this association may implicitly indicate that the serving cell is changed to another cell.

### {Aspect 2}

In aspect 2, explicit signaling for serving cell change indication will be described. Scenario 2 described above is applied to aspect 2, for example.

### {{Option 2-1}}

An example of the serving cell change indication will be described below. Note that activation/deactivation of a non-serving cell, change of a serving cell, and transmission/reception to/from another cell (non-serving cell) having a physical cell ID different from a physical cell ID of a serving cell may be used interchangeably.

The UE may receive a new MAC CE used for activation/deactivation of a non-serving cell and including at least one of fields (information) indicating (1) to (3) below corresponding to a non-serving cell. The UE may, when receiving the MAC CE, determine to change the serving cell to another cell (non-serving cell). The UE may control, based on the information, DL/UL signal transmission and reception to and from the non-serving cell. Note that the non-serving cell may be one or a plurality of non-serving cells. In the example to be described below, a MAC CE including a plurality of fields indicating a plurality of non-serving cell indices is applied.
(1) Serving cell ID.
(2) BWP ID.
(3) Non-serving cell ID used for activation. The non-serving cell ID may be replaced with any information (with which the non-serving cell can be identified) corresponding to the non-serving cell.

As an example of (3), any one of (3-1) to (3-5) may be applied, for example.
(3-1) PCI (PCI to be directly used). For example, 10 bits are used.
(3-2) Re-indexing index (new ID) of non-serving cell. The new ID may be associated with part of the PCI, and may be configured only for a serving cell and a non-serving cell used by (available to) the UE. The new ID can reduce the number of bits more than the PCI does.
(3-3) CSI report configuration ID (CSI-ReportConfigId) (when CSI-ReportConfig corresponds to one or a plurality of non-serving cells).
(3-4) CSI resource configuration ID (CSI-ResourceConfigId) (when CSI-ResourceConfigId corresponds to one or a plurality of non-serving cells).
(3-5) Bitmap indicating activation/deactivation of each non-serving cell. A size (the number of bits) of the bitmap may be the same as the number of non-serving cells configured in this CC. For example, when the second non-serving cell of three non-serving cells is activated, "010" is configured.

At least one piece of the information included in the MAC CE may be included in DCI. Alternatively, at least one of serving cells activated by the MAC CE may be indicated by the DCI. The MAC CE/DCI may include a field indicating a TCI state/SSB/CSI-RS from a cell having a different PCI, so that the UE can recognize, in a target cell (serving cell after change), a DL beam to be monitored. By using the TCI state/SSB/CSI-RS, the UE may create a beam report (CSI report) and transmit the created report.

### {{Option 2-2}}

The UE may receive a MAC CE obtained by adding a new 1-bit field "C" to an existing MAC CE. The field indicates whether change of a serving cell is performed. The UE may receive the MAC CE, and may determine, based on the field, whether to change the serving cell to another cell.

### {{Option 2-3}}

For the MAC CE in option 2-2, the MAC CE may further include a field indicating a serving cell index/PCI/another ID (the above-described new ID of option 2-1 or the like), or a field for a TCI state/SSB/CSI-RS for a target cell (serving cell after change).

In this manner, indication for serving cell change indication is indicated by a MAC CE/DCI, thereby allowing the UE to appropriately change a serving cell.

### {Example 1 of Serving Cell Switching}

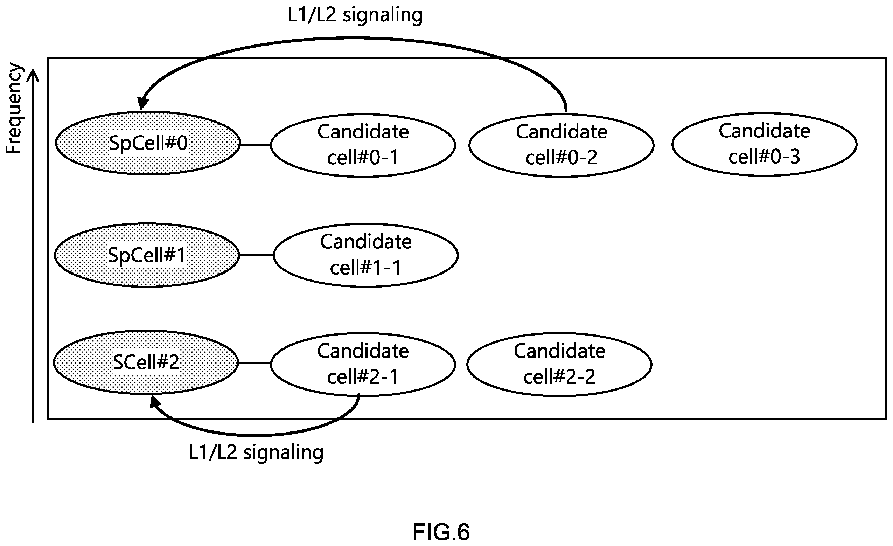

FIG. 6 is a diagram to show example 1 of the serving cell switching. For example, when L1/L2 signaling indicates, in a serving cell "SpCell #0" in an MCG/SCG, that the serving cell is changed to candidate cell #0-2, candidate cell #0-2 becomes a new serving cell "SpCell #0". For example, when L1/L2 signaling indicates, in a serving cell "SCell #2" in an MCG/SCG, that the serving cell is changed to candidate cell #2-1, candidate cell #2-1 becomes a new serving cell "SCell #2".

### {Example 2 of Serving Cell Switching}

RRC/MAC CE may configure a global candidate cell ID (cell #3, ..., 8) for each cell group, band, FR, or UE. The global candidate cell ID may indicate serving cell switching to the UE.

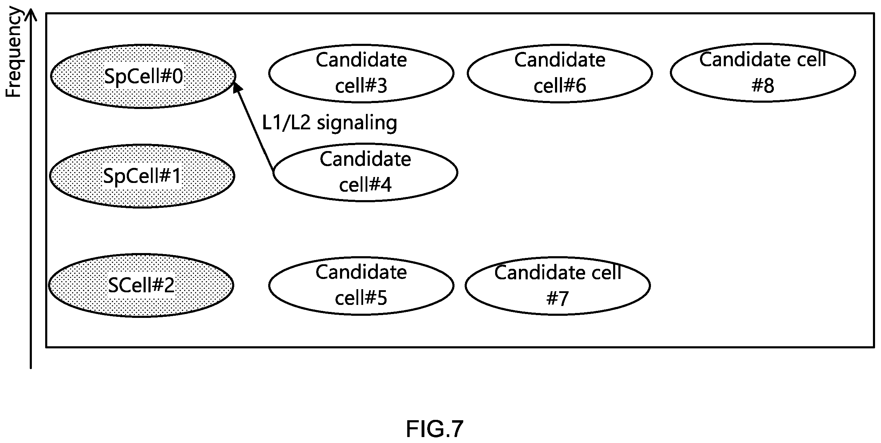

FIG. 7 is a diagram to show example 2 of the serving cell switching. As in FIG. 5A, a pool of a plurality of candidate cells can be configured, and L1/L2 signaling can switch a serving cell to any (activated) candidate cell in the pool. In this case, the configured candidate cell can become either an SpCell or an SCell, based on the L1/L2 signaling.

The UE may receive an indication of serving cell change (from cell #2-1 to candidate cell #4) via a MAC CE/DCI. Indicated candidate cell #4 becomes an SpCell in a new cell group (MCG/SCG).

### {Example 3 of Serving Cell Switching}

RRC/MAC CE may configure a cell group. The UE may perform serving cell switching, based on switching of the cell group.

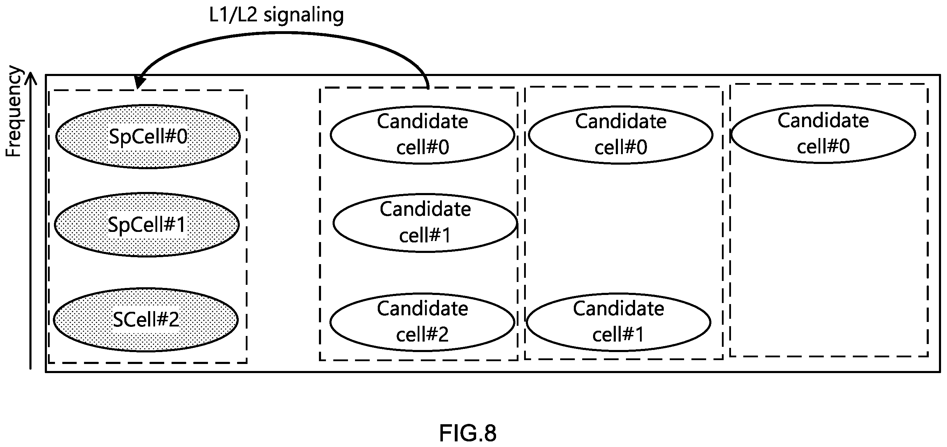

FIG. 8 is a diagram to show example 3 of the serving cell switching. The UE receives an indication of change of a cell group including a serving cell (change to candidate cell group #1), via a MAC CE/DCI. A cell included in indicated candidate cell group #1 becomes a new serving cell (SpCell, SCell). For example, candidate cells #0, #1, and #2 included in indicated candidate cell group #1 become new SpCell #0, SCell #1, and SCell #2, respectively. In other words, the serving cell group is switched.

### (Outline of L1L2-Triggered Mobility (LTM))

In L1L2-triggered mobility (LTM) supported by Rel. 18 or later versions, L1 inter-frequency measurement may be supported. Also, DL synchronization/UL synchronization in a candidate cell based on at least an SSB may be supported prior to a cell switch command.

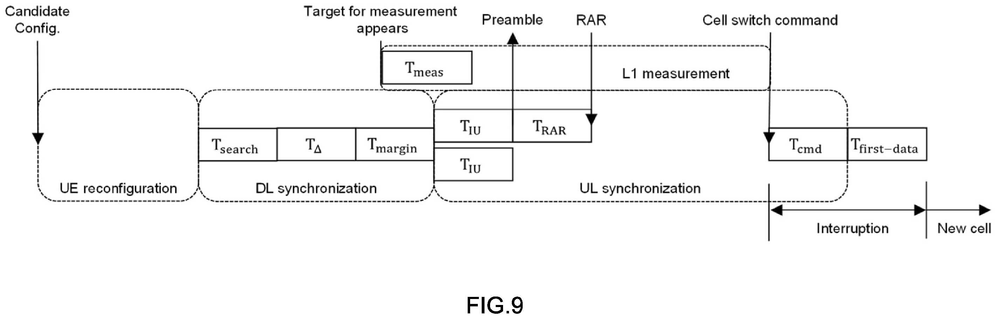

FIG. 9 is a diagram to show an outline of the L1L2-triggered mobility (LTM). LTM and L1/L2 inter-cell mobility may be used interchangeably.

The UE receives, from the NW, candidate cell configurations in UE reconfiguration. The UE reconfiguration includes T_{RRC}, and T_{proccesing1/}T_{proccesing2}. TR_{RC} (for example, up to 10 ms) is a processing time for RRC reconfiguration that delivers candidate cell configurations (candidate configurations). Tp_{roccesing1/T}p_{roccesing2} (for example, up to 20 ms for the same FR, up to 40 ms for different FRs) are times for respective UE processings before and after a cell switch command. This may include, for some cases, L2/3 reconfiguration, RF re-tuning, baseband re-tuning, security update, if necessary, and the like.

DL synchronization includes T_{search}, T_{Δ}, and T_{margin}. Ts_{earch} (for example, 0 ms in a case where a cell is known, up to 60 ms in a case where a cell is unknown) is a time necessary for a target cell search. TΔ is a time for fine tracking and all timing information acquisition. Tm_{argin} (for example, up to 2 ms) is a time for post-processing of an SSB and a CSI-RS.

L1 measurement (mesurement) includes Tₘₑₐₛ (SMTC periodicity, (for example, 20 ms)). Tmₑₐₛ is measurement latency from the appearance of a target to a cell switch command.

UL synchronization includes T_{IU}, T_{RAR}, and T_{cmd}. TI_{U} (for example, up to 15 ms) is a time for uncertain interruption in acquisition of the first available PRACH occasion in a new cell. T_{RAR} (for example, up to 4 ms) is a time for RAR latency. T_{cmd} (for example, up to 5 ms) is a time for processing of L1/L2 command (HARQ and paging).

T_{first-data} after T_{cmd} is a time for the UE to perform, after an RAR, the first DL reception/UL transmission on an indicated beam of a target cell.

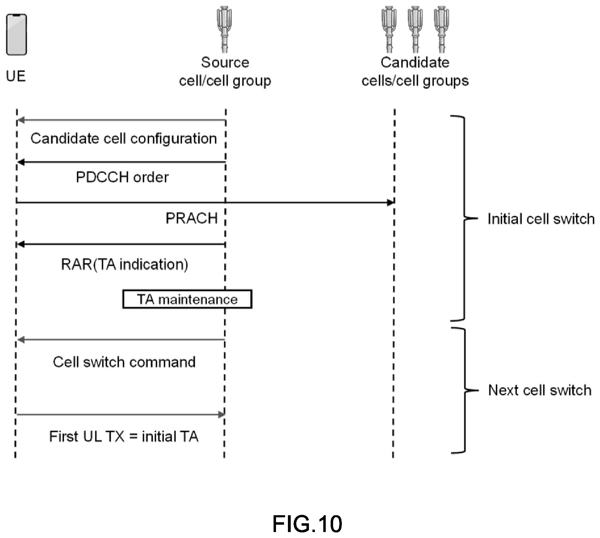

FIG. 10 is a diagram to show an example of a PDCCH order-based RACH (PDCCH ordered RACH) with RAR monitoring. Note that, in the present disclosure, a source cell and a source cell group may be used interchangeably. A candidate cell and a candidate cell group may be used interchangeably.

The source cell may transmit, to the UE, information related to configuration of a candidate cell (for example, candidate cell configuration information). The source cell may transmit, to the UE, a PDCCH order (for example, DCI format 1_0) used to trigger a PRACH. The PDCCH order (or DCI) may indicate a candidate cell (for example, one candidate cell)/random access occasion (RO) as a target of a PRACH trigger/transmission. The UE transmits, based on the PDCCH order, a PRACH in a RACH procedure to the candidate cells, for TAG/TA acquisition.

Next, the source cell transmits, to the UE, a response signal (RAR) to the PRACH. The RAR may include information related to a TA (for example, TA indication). The RAR (for example, a PDSCH including the RAR/a PDCCH for scheduling the PDSCH) may be monitored in a specific search space (for example, a common search space (CSS)) of a specific cell (for example, an SpCell) among current serving cells (only in a Distributed Unit (DU)). In the source cell, TA adjustment (for example, TA maintenance) is performed.

Next, the source cell may transmit a cell switch command to the UE. TA information may be moved/notified from the source cell to a target cell. The UE may control, based on the acquired TA, UL transmission after cell switching. For example, the UE may perform the first UL transmission by using an initial TA when UL synchronization of all candidate cells is not completed after an initial cell switch.

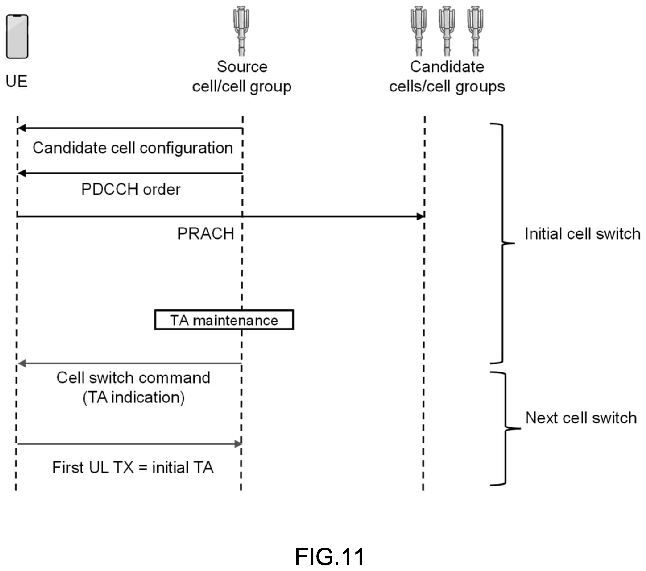

FIG. 11 is a diagram to show an example of a PDCCH order-based RACH (PDCCH ordered RACH) without RAR monitoring. Only the difference between FIG. 11 and FIG. 10 will be described.

In the example of FIG. 11, a PDCCH order used to trigger a PRAH may indicate one or more candidate cells (for example, a plurality of candidate cells)/random access occasions as a target of a PRACH trigger/transmission. The UE may transmit, based on the PDCCH order, a PRACH in a RACH procedure to the candidate cells, for acquisition of a plurality of TAGs/TAs. The source cell does not transmit a response signal (for example, RAR) to the PRACH. The source cell may indicate, to the UE, information related to a TA (for example, TA indication) by using a cell switch command.

In the present disclosure, a RACH without RAR and a RACH without RAR monitoring may be used interchangeably. A RACH may be used interchangeably with PRACH transmission triggered by a PDCCH order. RACH procedure/PRACH transmission without RAR monitoring may be used interchangeably with RACH procedure/PRACH transmission not requiring RAR monitoring, or RACH procedure/PRACH transmission in which RAR monitoring is not requested.

### {PDCCH Order}

DCI format 1_0 includes a DCI format indicator field, a bit field always set to 1, and a frequency domain resource assignment field. When a cyclic redundancy check (CRC) with DCI format 1_0 is scrambled by a C-RNTI, and all frequency domain resource assignment fields are 1, this DCI format 1_0 is for random access procedure initiated by a PDCCH order, and remaining fields are a random access preamble, a UL/supplementary Uplink (SUL) indicator, an SS/PBCH index (SSB index), a PRACH mask index, and a reserved bit (12 bits).

In a case of PRACH transmission triggered by the PDCCH order, when a value of a random access preamble index field is non-zero, a PRACH mask index field indicates a PRACH occasion for PRACH transmission for which a PRACH occasion is associated with an SS/PBCH block index indicated by an SS/PBCH block index field with the PDCCH order.

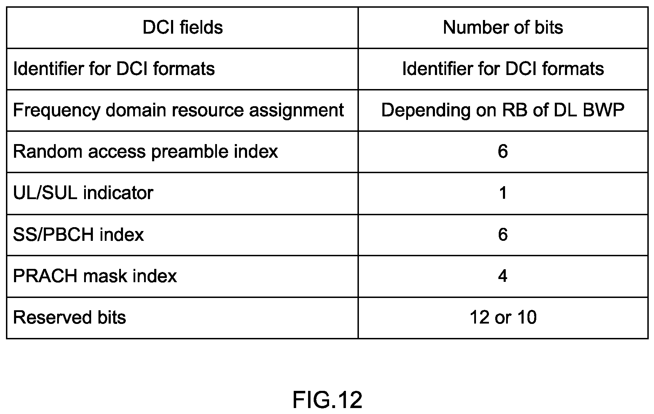

FIG. 12 is a diagram to show DCI format 1_0 CRC-scrambled by a C-RNTI. Frequency domain resource assignment may be used, for example, for a RACH based on indication by a PDCCH (PDCCH order). For example, the Frequency domain resource assignment all indicating 1 may mean that this DCI format 1_0 is used as a PDCCH order.

Random access preamble index may be used for Contention based Random Access (CBRA). For example, the Random access preamble index all being 0 may mean that this index is used for CBRA. Reserved bits are 12 bits in a case of operation in a cell with spectrum shared channel access, otherwise the Reserved bits are 10 bits.

In this manner, in L1/L2 based mobility (for example, LTM) supported by Rel. 18 or later versions, TA acquisition for a candidate cell may be supported prior to a cell switching command. In a TA acquisition mechanism for a candidate cell, at least a PDCCH ordered RACH may be supported. The PDCCH order may be triggered only by the source cell (for example, serving cell). DCI transmitted in the PDCCH order may indicate a candidate cell/RACH occasion (RO) for a candidate cell. The UE may be provided with a RACH resource configuration for the candidate cell prior to the PDCCH order.

In the PDCCH ordered RACH, at least one of a method with RAR monitoring and a method without RAR monitoring may be applied. When the method with RAR monitoring is applied, the UE may be indicated with RAR including information related to timing advance for the candidate cell (for example, TA information/TAC). When the method without RAR monitoring is applied, the UE may be indicated with a cell switch command including information related to timing advance for the candidate cell (for example, TA information/TAC).

### (Initial Access Procedure)

In an initial access procedure, the UE (RRC_IDLE mode) performs reception of an SS/PBCH block (SSB), transmission of Msg. 1 (PRACH/random access preamble/preamble), reception of Msg. 2 (PDCCH, PDSCH including a random access response (RAR)), transmission of Msg. 3 (PUSCH scheduled by an RAR UL grant), and reception of Msg. 4 (PDCCH, PDSCH including UE contention resolution identity). Subsequently, when an ACK for Msg. 4 is transmitted from the UE by a base station (network), an RRC connection is established (RRC_CONNECTED mode).

The reception of the SSB includes PSS detection, SSS detection, PBCH-DMRS detection, and PBCH reception. The PSS detection performs detection of part of a physical cell ID (PCI), detection (synchronization) of an OFDM symbol timing, and (coarse) frequency synchronization. The SSS detection includes detection of the physical cell ID. The PBCH-DMRS detection includes detection of (part of) an SSB index in a half radio frame (5 ms). The PBCH reception includes detection of a system frame number (SFN) and a radio frame timing (SSB index), reception of configuration information for remaining minimum system information (RMSI, SIB1) reception, and recognition of whether the UE can camp on the cell (carrier).

The SSB includes a band of 20 RBs and a time of 4 symbols. A transmission periodicity of the SSB is configurable from {5, 10, 20, 40, 80, 160} ms. In the half frame, a plurality of symbol locations of the SSB are defined based on a frequency range (FR1, FR2).

The PBCH includes a 56-bit payload. N repetitions of the PBCH are transmitted in a periodicity of 80 ms. N depends on the transmission periodicity of the SSB.

The system information consists of an MIB, RMSI (SIB1), and other system information (OSI) delivered by the PBCH. SIB1 includes a RACH configuration, and information for a RACH procedure. A time/frequency resource relationship between the SSB and a PDCCH monitoring resource for SIB1 is configured by the PBCH.

The base station that uses beam correspondence transmits a plurality of SSBs by using a plurality of respective beams every SSB transmission periodicity. The plurality of SSBs include a plurality of respective SSB indices. The UE that has detected one SSB transmits a PRACH in a RACH occasion associated with the SSB index, and receives an RAR in an RAR window.

### (RACH Procedure Triggered by PDCCH Order)

In existing systems (for example, Rel. 17 or earlier versions), regarding RACH procedure for a specific cell (for example, an SpCell), a UE performs, for a PDCCH ordered RACH, RACH procedure by assuming that a PDCCH order and a PDCCH for RAR have the same QCL properties. The PDCCH for RAR may be a PDCCH transmitted by a base station in response to a PRACH triggered for the UE by the PDCCH order (or transmitted from the UE). A PDSCH scheduled by the PDCCH for RAR may include an RAR. The QCL properties may be used interchangeably with DMRS QCL properties.

Specifically, when the UE detects, in response to PRACH transmission initiated by a PDCCH order for triggering a CFRA procedure for an SpCell, DCI format 1_0 CRC scrambled by a corresponding RA-RNTI, the UE may assume that a PDCCH including DCI format 1_0 and the PDCCH order have the same DMRS antenna port quasi-co-location properties.

In the existing systems (for example, Rel. 17 or earlier versions), regarding RACH procedure for another cell (for example, an SCell), such a restriction on the specific cell is absent, and the UE is supported to use QCL of a certain CORESET for reception of the PDCCH for RAR. The certain CORESET may be a CORESET associated with a type 1 CSS set (for example, a type 1-PDCCH CSS set).

Specifically, when the UE detects, in response to PRACH transmission initiated by a PDCCH order for triggering a CFRA procedure for an SCell, DCI format 1_0 CRC scrambled by a corresponding RA-RNTI, the UE may assume DMRS antenna port quasi-co-location properties of a CORESET associated with a type 1-PDCCH CSS set for reception of a PDCCH including DCI format 1_0.

Incidentally, in order to acquire a TA of each TRP (or a TA of the serving cell and the non-serving cell), a RACH for each TRP (or each serving cell/non-serving cell) may be triggered. A case is also considered where, for a PDCCH order for triggering a RACH procedure for the TRP (or the serving cell/non-serving cell), a PDCCH order and a PDCCH for RAR are transmitted from different TRPs. In such a case, it is necessary to relax/change a restriction that a PDCCH order and a PDCCH for RAR have the same DMRS QCL properties.

For example, a case may be supported where a PDCCH order from TRP #1 triggers a RACH for TRP #2 and where an RAR is transmitted from TRP #2. In this case, a RACH for any TRP can be triggered via a PDCCH order from any TRP, and flexibility of the RACH procedure can be enhanced.

As another example, a case may be supported where a PDCCH order from TRP #2 triggers a RACH for TRP #2 and where an RAR is transmitted from TRP #1. This example may occur in the inter-cell multi-TRP (for example, inter-cell M-TRP) case when the UE cannot receive a type 1 CSS set from the TRP of the non-serving cell.

### (Random Access Procedure in MAC Entity)

A random access procedure is initiated by RRC for an event following a PDCCH order, a MAC entity itself, or a specification. In the MAC entity, only one ongoing random access procedure is present at an any timing. A random access procedure for an SCell is initiated only by a PDCCH order with ra-PreambleIndex different from 0b000000.

When the random access procedure is initiated on a serving cell, the MAC entity performs the following.
- Configuring RA_TYPE as 4-stepRA when a random access procedure is initiated by a PDCCH order, and ra-PreambleIndex explicitly provided by a PDCCH is not 0b000000 or when a random access procedure is initiated for reconfiguration with synchronization, and a contention-free random access resource of a 4-step RA type is explicitly provided by rach-ConfigDedicated for a BWP selected for the random access procedure.

When selected RA_TYPE is configured as 4-stepRA, the MAC entity performs the following.
- Setting PREAMBLE_INDEX to notified ra-PreambleIndex and selecting an SSB notified by the PDCCH, when ra-PreambleIndex is explicitly provided from the PDCCH, and ra-PreambleIndex is not 0b000000, and
- determining, when the SSB is selected as described above, a subsequent available PRACH occasion among PRACH occasions corresponding to the selected SSB and allowed by a restriction given by ra-ssb-OccasionMaskIndex (The MAC entity randomly selects, with equal probability, a PRACH occasion from consecutive PRACH occasions corresponding to the selected SSB, in accordance with a specification. The MAC entity may, when determining the subsequent available PRACH occasion corresponding to the selected SSB, consider a possibility of occurrence of a measurement gap).

For example, when a new random access procedure is initiated while another random access procedure is already in progress in the MAC entity, whether to continue the ongoing procedure or initiate the new procedure (such as an SI request) depends on UE implementation.

When an ongoing random access procedure triggered by a certain PDCCH order is present while the UE is receiving another PDCCH order indicating the same random access preamble, PRACH mask index, and UL carrier, the procedure is regarded as the same random access procedure as that in progress and is not reinitialized.

### (Distinction Between RACH Procedures)

The UE may determine/judge (a type of) a RACH procedure to be applied, based on information (higher layer signaling (for example, RRC/MAC CE)/physical layer signaling (DCI)) described in aspects 1-1 to 1-2 below.

### {Aspect 1-1}

A (current) serving cell may be configured as a candidate cell. It is assumed that, for the serving cell configured as a candidate cell, a PDCCH ordered RACH without RAR is not used (applied).

Whether to apply the PDCCH ordered RACH without RAR to the candidate cell may be predefined by a specification or may be determined based on a UE capability. Alternatively, whether to apply the PDCCH ordered RACH without RAR to the candidate cell may be configured/indicated by higher layer signaling/physical layer signaling.

For the serving cell configured as a candidate cell, a legacy PDCCH ordered RACH (for example, a PDCCH with RAR) or a PDCCH ordered RACH without RAR may be configured/indicated by higher layer signaling/physical layer signaling.

Any one of the PDCCH ordered RACHs described above may be configured/indicated for each cell/CC or for all serving cells.

The PDCCH ordered RACH without RAR may be used/applied in a case where a counter for LTM power ramping is configured for a serving cell configured as a candidate cell. In this case, the power ramping counter may be configured for each candidate cell (it may be assumed/presupposed that the power ramping counter is configured).

### {Aspect 1-2}

For a serving cell configured as a candidate cell, which of a legacy PDCCH ordered RACH (for example, a PDCCH with RAR) or a PDCCH ordered RACH without RAR is to be performed may be explicitly/implicitly indicated by a PDCCH order (DCI).

In other words, the UE may determine/judge a type of PDCCH ordered RACH (a RACH procedure to be applied), based on the PDCCH order.

### <Explicit Indication>

1 bit in the DCI may be used to indicate which of the legacy PDCCH ordered RACH or the PDCCH ordered RACH without RAR is to be performed. Alternatively, 1 bit in the DCI may be used to indicate whether the PDCCH order is indication for LTM or indication for a case other than a case of the LTM.

For the 1 bit, a new bit field or an existing reserved bit field may be used.

Specifically, the 1 bit may indicate a PDCCH ordered RACH without RAR (PDCCH ordered RACH for LTM) by "0" and may indicate a legacy PDCCH ordered RACH by "1". Correspondence between the bit values is not limited to this, and may be reversed.

### <Implicit Indication>

The implicit indication can apply any one of options 1 to 2 below.

### <Option 1>

When the candidate cell is indicated by a candidate cell index (candidate cell ID), the candidate cell index may indicate a type of PDCCH ordered RACH. For example, when a specific candidate cell index is indicated, the PDCCH ordered RACH without RAR may be indicated to be applied.

It is presupposed that a candidate cell index is also given to the serving cell configured as a candidate cell. In this case, a field indicating the candidate cell index in the PDCCH order includes both an index for the serving cell and an index for the candidate cell.

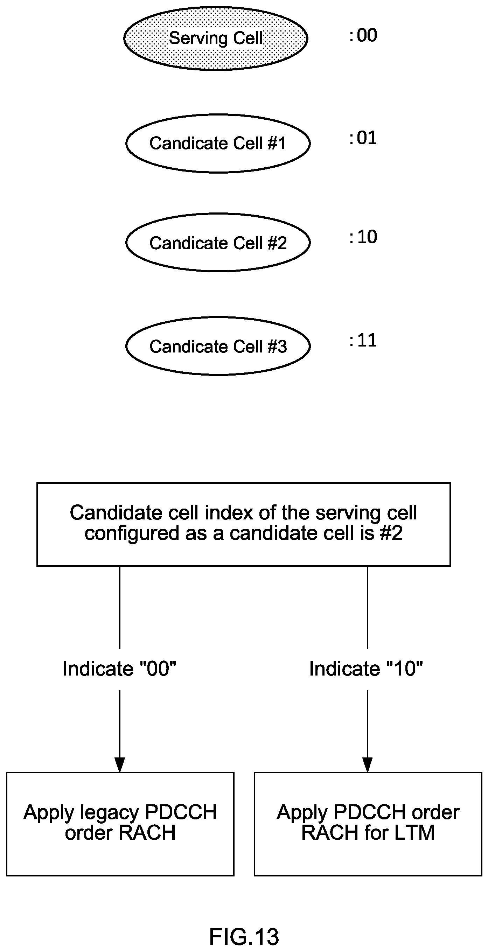

FIG. 13 is a diagram to show an example of the distinction between the RACH procedures according to the first embodiment. As shown in FIG. 13, the following cells may be indicated by using a 2-bit field, for example:
- Serving cell: 00
- Candidate cell #1: 01
- Candidate cell #2: 10
- Candidate cell #3: 11

For example, assume a case where a candidate cell index of the serving cell configured as a candidate cell is #2. Here, when "00" is indicated, it may mean/be indicated (interpreted) that the legacy PDCCH ordered RACH is applied/used. Alternatively, when "10" is indicated, it may mean/be indicated (interpreted) that the PDCCH ordered RACH without RAR is applied/used.

In other words, a type of PDCCH ordered RACH may be indicated (distinguished) based on whether a candidate cell index of the serving cell configured as a candidate cell and a candidate index indicated by the PDCCH order (DCI) are the same or different (serving cell).

More specifically, if a candidate cell index of the serving cell configured as a candidate cell and a candidate index indicated by the PDCCH order (DCI) are the same, the PDCCH ordered RACH for LTM may be indicated. On the other hand, if a candidate cell index of the serving cell configured as a candidate cell and a candidate index indicated by the PDCCH order (DCI) are different (if indication based on the PDCCH order is for the serving cell), the legacy PDCCH ordered RACH may be indicated.

### <Option 2>

The UE may determine/judge a type of PDCCH ordered RACH (a RACH procedure to be applied), based on a new bit field for LTM.

For example, when certain bits (X bits) of the new bit field for LTM are all 0, the legacy PDCCH ordered RACH may be indicated to be applied. Otherwise (when X bits of the new bit field for LTM are all non-zero), the PDCCH ordered RACH without RAR may be indicated to be applied.

The certain bits described above may indicate a candidate cell index and whether a PRACH is a first transmission or a retransmission.

### {Aspect 1-3}

The UE may control power ramping depending on a type of PDCCH ordered RACH as follows.

### <Case 1>

When the PDCCH ordered RACH without RAR is used/applied, the UE may perform power ramping by using a counter (power ramping counter) for LTM configured for each candidate cell or for all candidate cells.

### <Case 2>

When the legacy PDCCH ordered RACH is used/applied, the UE may perform power ramping by using a counter (power ramping counter) for (configured for) the serving cell, in a manner similar to that of existing operation.

According to aspects 1-1 to 1-3 described above, the UE can appropriately determine/judge a RACH to be applied, depending on a configured candidate cell.

### {Aspect 2}

In an existing specification, when a serving cell is configured as a candidate cell, and a PDCCH order indicating a cell index of the cell triggers, for the cell, a PDCCH ordered RACH without RAR, it is necessary that a UE always monitor RAR in an RAR window.

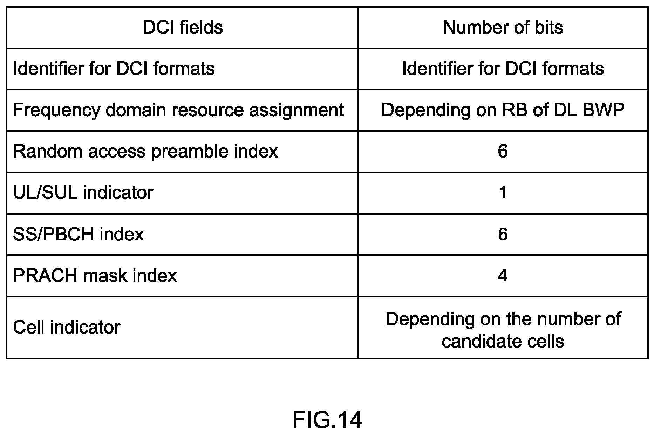

FIG. 14 is a diagram to show an example of DCI format 1_0 (DCI field). Description of a part common to FIG. 14 and FIG. 12 described above will be omitted, and only the difference between FIG. 14 and FIG. 12 will be described. As shown in FIG. 14, DCI format 1_0 (PDCCH order) may include a cell indicator field. The number of bits of the cell indicator field may depend on the number of candidate cells.

More specifically, when the PDCCH order is transmitted for the candidate cell, a bit size N of the cell indicator field may be determined by the following equation, based on the number of candidate cells (for example, C) configured by RACH configuration provided for early TA acquisition.$N = ceil \left(log2(\left(C+1\right)\right)$

In the present disclosure, ceil (X) may mean multiplying X by a ceiling function.

Here, the number of candidate cells used for calculation of the bit size is the number C+1 of candidate cells (where "+1" corresponds to the serving cell) with RACH configuration provided for early TA acquisition.

As described above, for acquisition of TA for the candidate cell, the PDCCH ordered RACH without RAR is triggered by the cell indicator field of the PDCCH order indicating a candidate cell.

For acquisition of TA for the serving cell, the legacy PDCCH ordered RACH (that is, with RAR) is triggered by the cell indicator field of the PDCCH order indicating specific values (for example, which are all 0) for the serving cell.

On the other hand, in the present specification, definition for distinction from existing operation is unclear. Furthermore, it is unclear which operation (that is, with RAR/without RAR) is to be applied for acquisition of TA for a candidate cell configured as a current serving cell (for example, a current SCell).

Thus, in aspect 2, Alt 1 to Alt 2 below will be proposed as methods of indicating which RACH operation is to be applied.

### <Alt 1>

The UE may always use the legacy PDCCH ordered RACH.

Examples of the indication methods include EarlyULSyncConfig not being configured for the candidate cell configured as the current serving cell. In other words, for acquisition of TA for the candidate cell configured as the current serving cell, the cell indicator field of the PDCCH order may always indicate all 0 for the serving cell.

### <Alt 2>

The UE may use both of the legacy PDCCH ordered RACH and the PDCCH ordered RACH without RAR.

Examples of the indication methods include indication by the cell indicator field of the PDCCH order. For example, the legacy PDCCH ordered RACH may be indicated when all the values are 0, and the PDCCH ordered RACH without RAR may be indicated when the values are candidate cell index values.

### {Example of Description of Specification}

An example of description of the specification will be described below.

The specification may newly define operation for distinction between existing RACH operation and RACH operation without RAR. The specification may define UE operation in RAR reception in a case where a PDCCH ordered RACH without RAR is triggered for a candidate cell configured as a serving cell.

When the UE is configured with a higher layer parameter "EarlyUlSyncConfig", a cell indicator (field) indicates, by ceil(log₂(C+1)) bits, a cell for corresponding PRACH transmission.

Here, C is the number of candidate cells configured by the higher layer parameter "EarlyUlSyncConfig".

The field indicates the serving cell when the values are all 0, otherwise the field is 0 bits.

Note that "when the values are all 0" described above may be used interchangeably with "when the values are all 1", and vice versa.

Except when the serving cell is indicated as an LTM candidate cell by a PDCCH order, when a random access preamble is transmitted in the serving cell, the MAC entity performs specific operation for reception of a random access response irrespective of occurrence of a measurement gap.

Note that the above-described "except when the serving cell is indicated as an LTM candidate cell by a PDCCH order" may be used interchangeably with "except when a RACH procedure is triggered by a PDCCH order indicating an LTM candidate cell index" or "except when a RACH is triggered by a PDCCH order indicating a non-zero cell indicator", and vice versa.

Note that, when the serving cell is indicated as the LTM candidate cell by the PDCCH order, the PDCCH ordered RACH without RAR may be applied.

According to aspect 2 described above, the UE can appropriately determine/judge a RACH to be applied, depending on a configured candidate cell.

### (Power Control Process for PRACH)

Transmission power for a preamble (PRACH) is calculated by the UE. The transmission power for the PRACH is determined by open-loop power control and a power ramping (lifting) mechanism. The UE calculates the transmission power, based on received power and a preamble power ramping counter value configured from a network.

### (Analysis)

For a PDCCH order-based RACH (PDCCH ordered RACH), it is studied that, in a certain case (for example, a case where RAR reception is not configured), a UE determines whether to perform power ramping, based on a PDCCH order.

For example, when the power ramping is performed, the PDCCH order may explicitly indicate whether a PRACH is an initial transmission or a retransmission. When the power ramping is performed, a power ramping-up value may be configured.

Otherwise (when the power ramping is not performed), transmission power for the PRACH may be determined by open-loop power control.

Incidentally, it is assumed that, in the case above (the case where RAR reception is not configured), a plurality of RACH procedures (RACH transmissions) are performed in parallel. In this case, it remains unclear how power ramping for each RACH transmission is maintained. Unless these are clear, an appropriate random access procedure fails, which may result in reduction in communication throughput.

Thus, the inventors of the present invention studied power ramping in a case where a plurality of RACHs are applied, and came up with the idea of one aspect of the present embodiment.

Embodiments according to the present disclosure will be described in detail with reference to the drawings as follows. Note that the embodiments/aspects (for example, respective cases) to be described below may each be used individually, or at least two of the embodiments/aspects may be employed in combination.

### (Various interchangeable uses and so on)

In the present disclosure, "A/B" and "at least one of A and B" may be used interchangeably. In the present disclosure, "A/B/C" may mean "at least one of A, B, and C".

In the present disclosure, notify, activate, deactivate, indicate, select, configure, update, determine, and the like may be used interchangeably. In the present disclosure, "support", "control", "controllable", "operate", "operable", and the like may be used interchangeably.

In the present disclosure, radio resource control (RRC), an RRC parameter, an RRC message, a higher layer parameter, a field, an information element (IE), a configuration, and the like may be used interchangeably. In the present disclosure, a Medium Access Control control element (MAC Control Element (CE)), an update command, an activation/deactivation command, and the like may be used interchangeably.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, a cell, a PCI, a serving cell, an SpCell, a source serving cell (source cell), a reference/reference cell, a CC, a BWP, a BWP in a CC, and a band may be used interchangeably. In the present disclosure, an additional cell, another cell, a non-serving cell, a cell having a different PCI, a candidate cell, a candidate serving cell, a cell having a PCI different from a PCI of a current serving cell, another serving cell, a target cell, a target serving cell, and a neighbour cell may be used interchangeably. In the present disclosure, switching, change, and update may be used interchangeably. A serving cell may be used interchangeably with a serving cell before switching or a serving cell after switching. LTM application, cell application, and cell switch may be used interchangeably. LTM application, beam application, and beam switch may be used interchangeably.

In the present disclosure, a RACH resource, an RA resource, a PRACH preamble, an occasion, a RACH occasion (RO), a PRACH occasion, a repetition resource, a repetition configuration resource, a resource configured for an RO/repetition, a time instance and a frequency instance, a time resource and a frequency resource, an RO/preamble resource, a repetition, a PRACH resource, a time/frequency resource for PRACH, a preamble configuration/index, a mask configuration/index, and a PRACH configuration may be used interchangeably.

In the present disclosure, a candidate cell and a candidate cell group may be used interchangeably. A candidate cell in the present disclosure may be a candidate cell indicated in a PDCCH order. A PDCCH order and DCI (for example, DCI format 1_0) may be used interchangeably. In the present disclosure, an RO, an RO index, and RO # may be used interchangeably.

In the present disclosure, a RACH (procedure), PRACH transmission triggered by a PDCCH order, and a PDCCH ordered RACH may be used interchangeably. A RACH without RAR, a RACH without RAR monitoring, a PDCCH ordered RACH without RAR, and a PDCCH ordered RACH for LTM may be used interchangeably. RACH procedure/PRACH transmission without RAR monitoring may be used interchangeably with RACH procedure/PRACH transmission not requiring RAR monitoring, or RACH procedure/PRACH transmission in which RAR monitoring is not requested.

In the present disclosure, "without RAR", "not requiring RAR monitoring", "without application of RAR", "not requiring RAR", and "for LTM" may be used interchangeably.

In the present disclosure, "with RAR", "requiring RAR monitoring", "with application of RAR", and "requiring RAR" may be used interchangeably.

The description below may be applied to inter-cell mobility (for example, L1/L2 inter cell mobility) or to communication control other than the inter-cell mobility. The L1/L2 inter cell mobility may be used interchangeably with at least one of cell switching, cell switch, and cell change.

### (Radio Communication Method)

### <First Embodiment>

A first embodiment relates to maintenance of power ramping, and describes determination to perform power ramping. The present disclosure describes, as a certain case, a case where RAR reception is not configured (a case without RAR monitoring), but is not limited to this. The radio communication method of the present disclosure is also applicable to a case where RAR reception is configured (a case with RAR monitoring).

A UE may determine to perform (whether to perform) the power ramping, based on a specific rule/condition. For example, the UE may determine to perform the power ramping, based on (indication of) a received PDCCH order. The specific rule/condition for performing of the power ramping is classified into embodiments 1-1 to 1-4 to be described below. The embodiments may be applied in combination as appropriate, or when a specific embodiment (for example, embodiment 1-1) is not applied, another embodiment (at least one of embodiments 1-2 to 1-4) may be applied.

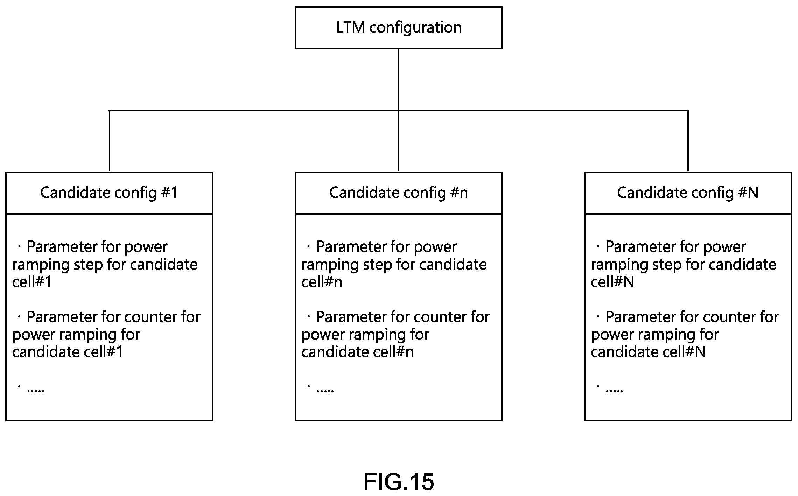

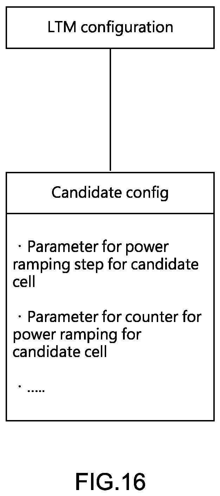

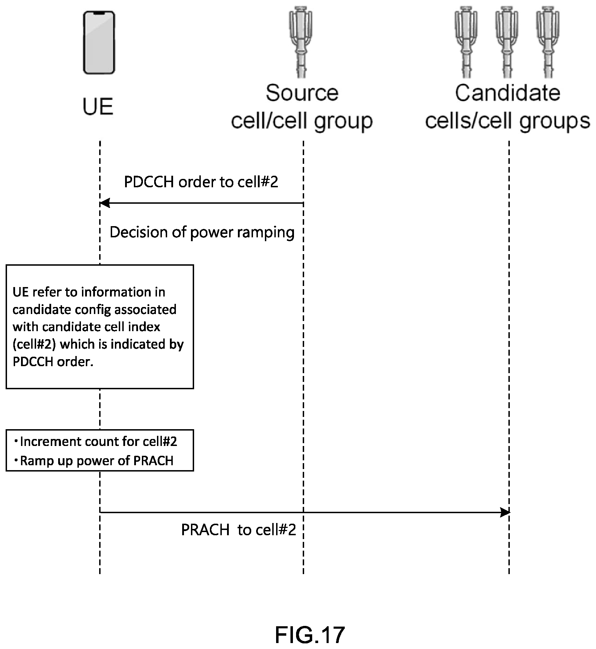

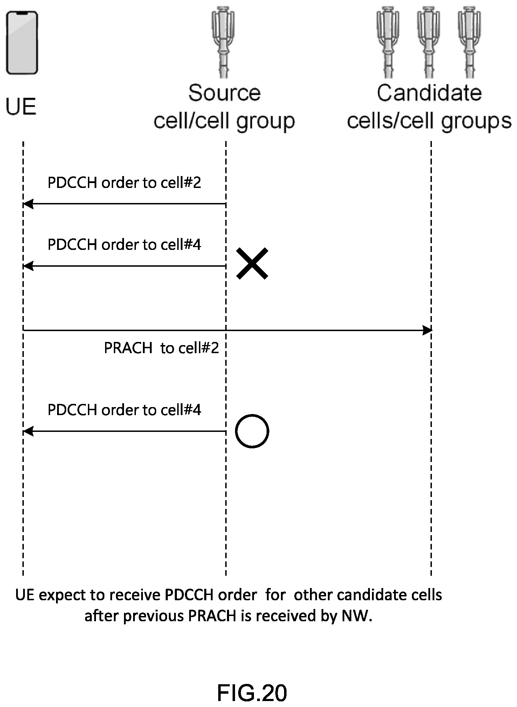

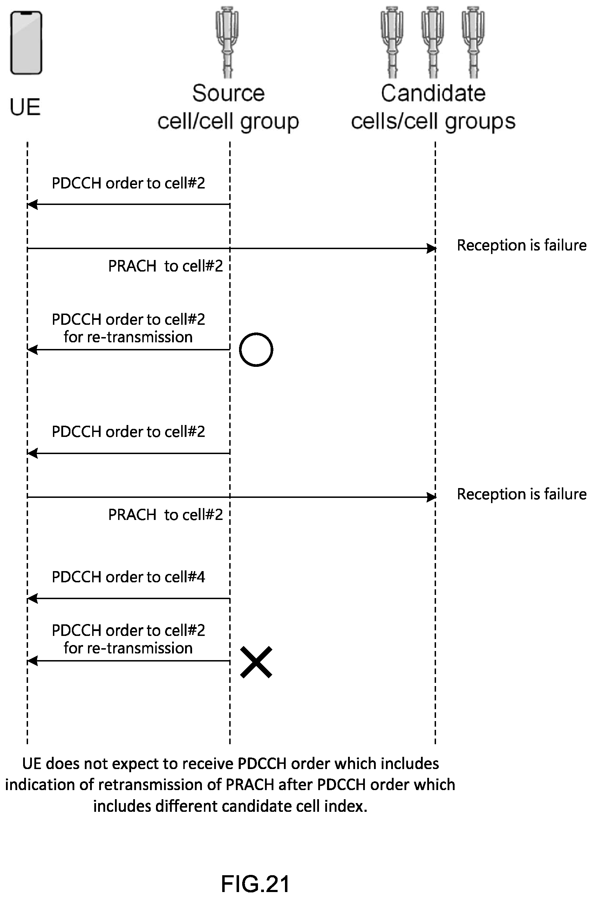

FIG. 15 and FIG. 16 are diagrams to show examples of LTM configuration according to the first embodiment. FIG. 17 to FIG. 19 are diagrams to show examples of power ramping procedure according to the first embodiment. FIG. 20 and FIG. 21 are diagrams to show examples of operation between the UE and a specific cell according to the first embodiment.

### {Embodiment 1-1}

Embodiment 1-1 is based on explicit indication of a PDCCH order. For example, the UE may determine to perform the power ramping, based on the PDCCH order explicitly indicating whether a PRACH is an initial transmission/retransmission.

More specifically, when the PDCCH order indicates that the PRACH is an initial transmission, the UE may determine not to perform the power ramping. On the other hand, when the PDCCH order indicates that the PRACH is a retransmission, the UE may determine to perform the power ramping.

The determinations of the performing above may be reversed. In other words, when the PDCCH order indicates that the PRACH is an initial transmission, the UE may determine to perform the power ramping. On the other hand, when the PDCCH order indicates that the PRACH is a retransmission, the UE may determine not to perform the power ramping.

The UE may be configured with a specific higher layer parameter (for example, RRC) related to power ramping, for each cell or in common for cells. Hereinafter, options 1 to 7 depending on configured higher layer parameter(s) (FIG. 15 and FIG. 16) may be applied. The options may be applied in combination as appropriate.

First, options 1 to 4 will be described. Options 1 to 4 correspond to a case where a plurality of higher layer parameters are configured to the UE (a case where a higher layer parameter is configured for each candidate cell). The plurality of higher layer parameters may be RRC including information related to a power ramping-up value/power ramping counter for PRACH transmission for each candidate cell (per candidate cell) (for example, powerRampingStep, PREAMBLE_POWER_RAMPING_COUNTER). The RRC may be a higher layer parameter related to LTM configuration (for example, LTM-CandidateConfig)/higher layer parameter related to RACH configuration (for example, RACH-ConfigGeneric/RACH-ConfigGenericTwoStepRA).

As shown in FIG. 15, the LTM configuration may include candidate configuration #n for each candidate cell (where n may be an integer between 1 and N). Each candidate configuration #n may include, for example, at least one of a parameter for a power ramping step for candidate cell #n, a parameter for a power ramping counter for candidate cell #n, and the like.

### <<Option 1>>

The UE may be provided/configured with RRC including information related to a power ramping-up value/power ramping counter for PRACH transmission for each candidate cell (per candidate cell), by part of ServingCellConfig.

### <<Option 2>>

The UE may be provided/configured with RRC including information related to a power ramping-up value/power ramping counter for PRACH transmission for each candidate cell (per candidate cell), by part of LTM-CandidateConfig/for each LTM-CandidateConfig.

### <<Option 3>>

The UE may be provided/configured with RRC including information related to a power ramping-up value/power ramping counter for PRACH transmission for each candidate cell (per candidate cell), by part of a configuration different from LTM-CandidateConfig.

### <<Option 4>>

The UE does not expect operations of options 4-1 to 4-2 below.

### <Option 4-1>

A plurality of RACHs without RAR reception (without configured RAR reception) being in progress in parallel.

### <Option 4-2>

Receiving a PDCCH order including an indication of PRACH retransmission after a PDCCH order including a different candidate cell index.

According to options 1 to 4, the UE may use, in a higher layer parameter associated with a candidate cell index indicated by a PDCCH order, information related to a power ramping-up value/power ramping counter for PRACH transmission.

Next, options 5 to 7 will be described. Unlike options 1 to 4, options 5 to 7 correspond to a case where one higher layer parameter is configured to the UE (a case where a higher layer parameter common to candidate cells is configured). The higher layer parameter may be RRC including information related to a power ramping-up value/power ramping counter for PRACH transmission for one candidate cell, as in an existing manner.

As shown in FIG. 16, the LTM configuration may include one/common candidate configuration for a candidate cell. The candidate configuration may include, for example, at least one of a parameter for a power ramping step for a certain candidate cell, a parameter for a power ramping counter for a certain candidate cell, and the like.

### <<Option 5>>

The UE does not expect operations of options 5-1 to 5-2 below.

### <Option 5-1>

A plurality of RACHs without RAR reception (without configured RAR reception) being in progress in parallel.

### <Option 5-2>

Receiving a PDCCH order including an indication of PRACH retransmission after a PDCCH order including a different candidate cell index.

### <<Option 6>>

The PDCCH order may include information related to the number of retransmissions (the number to retransmit)/number of times of ramping up of power (the number to ramp up power). In this case, the UE does not require another PDCCH order for power ramping for one certain candidate cell.

### <<Option 7>>

The PDCCH order may include information related to a retransmission number/power ramping number, that is, information related a number indicating which retransmission/power ramping a retransmission/power ramping is. In this case, the UE can use PRACH transmission power computed by power ramping-up configured by a higher layer parameter.

### <<Specific Operation>>

FIG. 17 corresponds to the operations of options 1 to 4. As shown in FIG. 17, a source cell may transmit, to the UE, a PDCCH order for a certain candidate cell (for example, cell #2), for determination of power ramping.

The UE may refer to information in candidate configuration associated with a candidate cell index (cell #2) indicated by the received PDCCH order.

The UE may increment a count for the candidate cell index (cell #2) to perform power ramping of a PRACH.

Subsequently, the UE may transmit a PRACH for the certain candidate cell (for example, cell #2) to candidate cells.

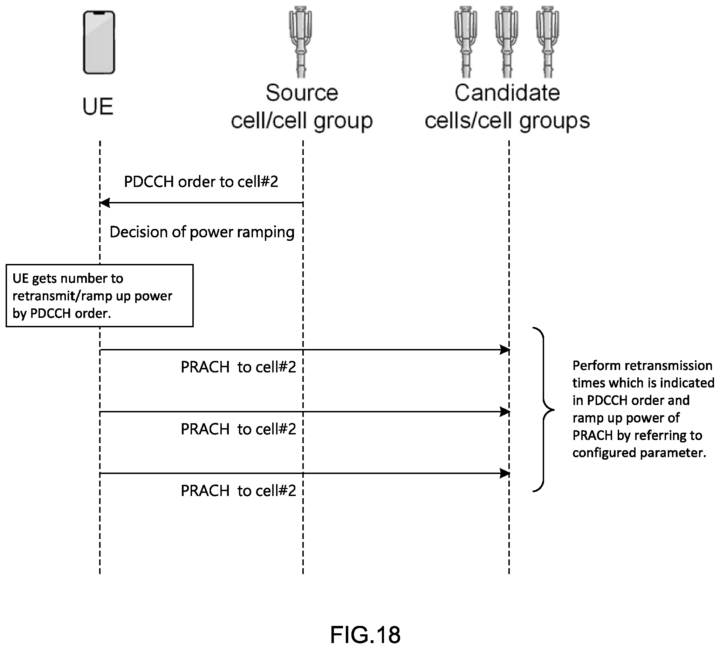

FIG. 18 corresponds to the operation of option 6. As shown in FIG. 18, a source cell may transmit, to the UE, a PDCCH order for a certain candidate cell (for example, cell #2), for determination of power ramping.

The UE may acquire a retransmission number/power ramping number from the received PDCCH order.

Subsequently, the UE may transmit a plurality of PRACHs (in FIG. 18, three PRACHs) for the certain candidate cell (for example, cell #2) to candidate cells. In other words, the UE may transmit a PRACH to a candidate cell a plurality of times.

In this manner, the UE may perform PRACH retransmission, based on the number of retransmissions indicated by the PDCCH order. The UE may perform power ramping of a PRACH by referring to a configured parameter.

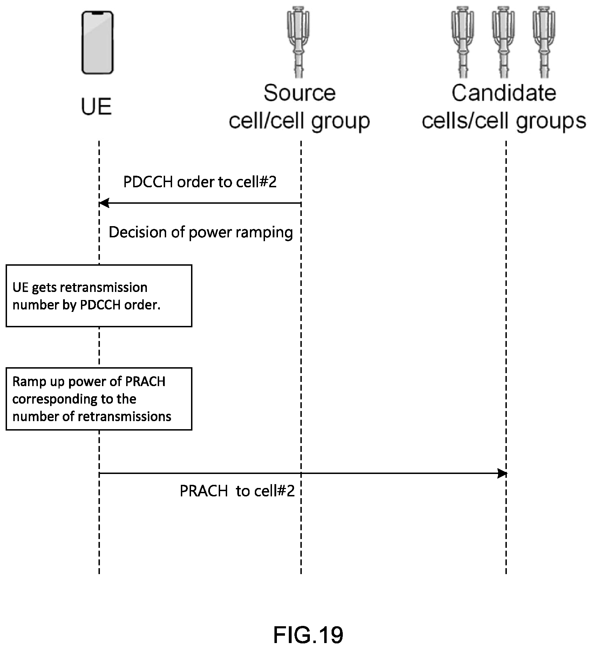

FIG. 19 corresponds to the operation of option 7. As shown in FIG. 19, a source cell may transmit, to the UE, a PDCCH order for a certain candidate cell (for example, cell #2), for determination of power ramping.

The UE may acquire a retransmission number from the received PDCCH order.

The UE may perform power ramping of a PRACH corresponding to the retransmission number.

Subsequently, the UE may transmit a PRACH for the certain candidate cell (for example, cell #2) to candidate cells.

FIG. 20 corresponds to the operations of options 4-1 and 5-1. As shown in FIG. 20, a source cell may transmit, to the UE, a PDCCH order for a certain candidate cell (for example, cell #2).

Here, the UE does not expect to receive a PDCCH order for a candidate cell (for example, cell #4) different from the certain candidate cell. In other words, the UE does not expect that a plurality of RACHs are in progress in parallel.

In this case, the UE may transmit a PRACH for the certain candidate cell (for example, cell #2) to candidate cells.

Subsequently, a source cell may transmit, to the UE, a PDCCH order for another candidate cell (for example, cell #4). In this case, the UE may receive a PDCCH order for such another candidate cell (for example, cell #4).

In this manner, the UE may expect to receive a PDCCH order for another candidate cell (for example, cell #4) after a previous PRACH (for example, for cell #2) is received by a NW (candidate cell).

FIG. 21 corresponds to the operations of options 4-2 and 5-2. As shown in FIG. 21, a source cell may transmit, to the UE, a PDCCH order for a certain candidate cell (for example, cell #2). The UE may transmit a PRACH for the certain candidate cell (for example, cell #2) to candidate cells.

Here, when the candidate cells have failed to receive the PRACH, the source cell may transmit, to the UE, a PDCCH order for the certain candidate cell (for example, cell #2) for retransmission.

When the procedure above has been repeated, and the candidate cells have failed to receive the PRACH again, the source cell may transmit, to the UE, a PDCCH order for another candidate cell (for example, cell #4).

Here, the UE does not expect to receive a PDCCH order (for example, for cell #2) including an indication of PRACH retransmission after a PDCCH order for a candidate cell (for example, cell #4) different from the certain candidate cell (for example, cell #2).

### {Embodiment 1-2}

Embodiment 1-2 is based on explicit indication of a PDCCH order. For example, the UE may determine to perform the power ramping, based on the PDCCH order explicitly indicating whether a PRACH is an initial transmission/retransmission.

The UE may determine to perform the power ramping, based on whether the PDCCH order includes at least one of the same RO (which may be referred to as RACH occasion, PRACH occasion, or random access occasion), candidate cell ID, and SS/PBCH block index as that of a previous PDCCH order.

More specifically, the UE may determine to perform the power ramping when the PDCCH order includes at least one of the same RO, candidate cell ID, and SS/PBCH block index as that of the previous PDCCH order. On the other hand, the UE may determine not to perform the power ramping when the PDCCH order includes at least one of an RO, a candidate cell ID, and an SS/PBCH block index different from that of the previous PDCCH order.

The determinations of the performing above may be reversed. In other words, the UE may determine not to perform the power ramping when the PDCCH order includes at least one of the same RO, candidate cell ID, and SS/PBCH block index as that of the previous PDCCH order. On the other hand, the UE may determine to perform the power ramping when the PDCCH order includes at least one of an RO, a candidate cell ID, and an SS/PBCH block index different from that of the previous PDCCH order.

The UE may be configured with a specific higher layer parameter (for example, RRC) related to power ramping, for each cell or in common for cells. Hereinafter, options 8 to 14 depending on configured higher layer parameter(s) (FIG. 15 and FIG. 16) may be applied. The options may be applied in combination as appropriate.

First, options 8 to 11 will be described. Options 8 to 11 correspond to a case where a plurality of higher layer parameters are configured to the UE (a case where a higher layer parameter is configured for each candidate cell). The plurality of higher layer parameters may be RRC including information related to a power ramping-up value/power ramping counter for PRACH transmission for each candidate cell (per candidate cell) (for example, powerRampingStep, PREAMBLE_POWER_RAMPING_COUNTER). The RRC may be a higher layer parameter related to LTM configuration (for example, LTM-CandidateConfig)/higher layer parameter related to RACH configuration (for example, RACH-ConfigGeneric/RACH-ConfigGenericTwoStepRA).

As shown in FIG. 15, the LTM configuration may include candidate configuration #n for each candidate cell (where n may be an integer between 1 and N). Each candidate configuration #n may include, for example, at least one of a parameter for a power ramping step for candidate cell #n, a parameter for a power ramping counter for candidate cell #n, and the like.

### <<Option 8>>

The UE may be provided/configured with RRC including information related to a power ramping-up value/power ramping counter for PRACH transmission for each candidate cell (per candidate cell), by part of ServingCellConfig.

### <<Option 9>>

The UE may be provided/configured with RRC including information related to a power ramping-up value/power ramping counter for PRACH transmission for each candidate cell (per candidate cell), by part of LTM-CandidateConfig/for each LTM-CandidateConfig.

### <<Option 10>>

The UE may be provided/configured with RRC including information related to a power ramping-up value/power ramping counter for PRACH transmission for each candidate cell (per candidate cell), by part of a configuration different from LTM-CandidateConfig.

### <<Option 11>>

The UE does not expect operations of options 11-1 to 11-2 below.

### <Option 11-1>

A plurality of RACHs without RAR reception (without configured RAR reception) being in progress in parallel.

### <Option 11-2>

Receiving a PDCCH order including an indication of PRACH retransmission after a PDCCH order including a different candidate cell index.

According to options 8 to 11, the UE may use, in a higher layer parameter associated with a candidate cell index indicated by a PDCCH order, information related to a power ramping-up value/power ramping counter for PRACH transmission.

Next, options 12 to 14 will be described. Unlike options 8 to 11, options 12 to 14 correspond to a case where one higher layer parameter is configured to the UE (a case where a higher layer parameter common to candidate cells is configured). The higher layer parameter may be RRC including information related to a power ramping-up value/power ramping counter for PRACH transmission for one candidate cell, as in an existing manner.

As shown in FIG. 16, the LTM configuration may include one/common candidate configuration for a candidate cell. The candidate configuration may include, for example, at least one of a parameter for a power ramping step for a certain candidate cell, a parameter for a power ramping counter for a certain candidate cell, and the like.

### <<Option 12>>

The UE does not expect operations of options 12-1 to 12-2 below.

### <Option 12-1>

A plurality of RACHs without RAR reception (without configured RAR reception) being in progress in parallel.

### <Option 12-2>

Receiving a PDCCH order including an indication of PRACH retransmission after a PDCCH order including a different candidate cell index.

### <<Option 13>>

The PDCCH order may include information related to the number of retransmissions (the number to retransmit)/number of times of ramping up of power (the number to ramp up power). In this case, the UE does not require another PDCCH order for power ramping for one certain candidate cell.

### <<Option 14>>

The PDCCH order may include information related to a retransmission number/power ramping number, that is, information related a number indicating which retransmission/power ramping a retransmission/power ramping is. In this case, the UE can use PRACH transmission power computed by power ramping-up configured by a higher layer parameter.

### <<Specific Operation>>

FIG. 17 corresponds to the operations of options 8 to 11. As shown in FIG. 17, a source cell may transmit, to the UE, a PDCCH order for a certain candidate cell (for example, cell #2), for determination of power ramping.

The UE may refer to information in candidate configuration associated with a candidate cell index (cell #2) indicated by the received PDCCH order.

The UE may increment a count for the candidate cell index (cell #2) to perform power ramping of a PRACH.

Subsequently, the UE may transmit a PRACH for the certain candidate cell (for example, cell #2) to candidate cells.

FIG. 18 corresponds to the operation of option 13. As shown in FIG. 18, a source cell may transmit, to the UE, a PDCCH order for a certain candidate cell (for example, cell #2), for determination of power ramping.

The UE may acquire a retransmission number/power ramping number from the received PDCCH order.

Subsequently, the UE may transmit a plurality of PRACHs (in FIG. 18, three PRACHs) for the certain candidate cell (for example, cell #2) to candidate cells. In other words, the UE may transmit a PRACH to a candidate cell a plurality of times.

In this manner, the UE may perform PRACH retransmission, based on the number of retransmissions indicated by the PDCCH order. The UE may perform power ramping of a PRACH by referring to a configured parameter.

FIG. 19 corresponds to the operation of option 14. As shown in FIG. 19, a source cell may transmit, to the UE, a PDCCH order for a certain candidate cell (for example, cell #2), for determination of power ramping.

The UE may acquire a retransmission number from the received PDCCH order.

The UE may perform power ramping of a PRACH corresponding to the retransmission number.

Subsequently, the UE may transmit a PRACH for the certain candidate cell (for example, cell #2) to candidate cells.

FIG. 20 corresponds to the operations of options 11-1 and 12-1. As shown in FIG. 20, a source cell may transmit, to the UE, a PDCCH order for a certain candidate cell (for example, cell #2).

Here, the UE does not expect to receive a PDCCH order for a candidate cell (for example, cell #4) different from the certain candidate cell. In other words, the UE does not expect that a plurality of RACHs are in progress in parallel.

In this case, the UE may transmit a PRACH for the certain candidate cell (for example, cell #2) to candidate cells.

Subsequently, a source cell may transmit, to the UE, a PDCCH order for another candidate cell (for example, cell #4). In this case, the UE may receive a PDCCH order for such another candidate cell (for example, cell #4).

In this manner, the UE may expect to receive a PDCCH order for another candidate cell (for example, cell #4) after a previous PRACH (for example, for cell #2) is received by a NW (candidate cell).

FIG. 21 corresponds to the operations of options 11-2 and 12-2. As shown in FIG. 21, a source cell may transmit, to the UE, a PDCCH order for a certain candidate cell (for example, cell #2). The UE may transmit a PRACH for the certain candidate cell (for example, cell #2) to candidate cells.

Here, when the candidate cells have failed to receive the PRACH, the source cell may transmit, to the UE, a PDCCH order for the certain candidate cell (for example, cell #2) for retransmission.

When the procedure above has been repeated, and the candidate cells have failed to receive the PRACH again, the source cell may transmit, to the UE, a PDCCH order for another candidate cell (for example, cell #4).

Here, the UE does not expect to receive a PDCCH order (for example, for cell #2) including an indication of PRACH retransmission after a PDCCH order for a candidate cell (for example, cell #4) different from the certain candidate cell (for example, cell #2).

### {Embodiment 1-3}

Embodiment 1-3 is based on explicit indication of a PDCCH order. For example, the UE may determine to perform the power ramping, based on the PDCCH order explicitly indicating whether a PRACH is an initial transmission/retransmission.

The UE may determine to perform the power ramping, based on indication (other indication) different from the indication in the above-described PDCCH order. Such other indication in the PDCCH order may use a reserved bit (field), for example.

Specifically, one reserved bit (field) in the PDCCH order being 0 (zero) may mean that the power ramping is not performed. One reserved bit (field) in the PDCCH order being 1 may mean that the power ramping is performed.

The indications of the performing above may be reversed. In other words, one reserved bit in the PDCCH order being 0 (zero) may mean that the power ramping is performed. One reserved bit (field) in the PDCCH order being 1 may mean that the power ramping is not performed.

In this manner, the UE can determine to perform the power ramping, based on a value of a reserved bit (field) in the PDCCH order.

The indication of performing of the power ramping using the reserved bit (field) described above may be configured/indicated to the UE by higher layer signaling. For example, when the indication of performing of the power ramping is not configured by higher layer signaling, the UE may not always perform the power ramping.

The UE may be configured with a specific higher layer parameter (for example, RRC) related to power ramping, for each cell or in common for cells. Hereinafter, options 15 to 21 depending on configured higher layer parameter(s) may be applied. The options may be applied in combination as appropriate.

First, options 15 to 18 will be described. Options 15 to 18 correspond to a case where a plurality of higher layer parameters are configured to the UE (a case where a higher layer parameter is configured for each candidate cell). The plurality of higher layer parameters may be RRC including information related to a power ramping-up value/power ramping counter for PRACH transmission for each candidate cell (per candidate cell) (for example, powerRampingStep, PREAMBLE_POWER_RAMPING_COUNTER). The RRC may be a higher layer parameter related to RACH configuration (for example, RACH-ConfigGeneric/RACH-ConfigGenericTwoStepRA).

### <<Option 15>>

The UE may be provided/configured with RRC including information related to a power ramping-up value/power ramping counter for PRACH transmission for each candidate cell (per candidate cell), by part of ServingCellConfig.

### <<Option 16>>

The UE may be provided/configured with RRC including information related to a power ramping-up value/power ramping counter for PRACH transmission for each candidate cell (per candidate cell), by part of LTM-CandidateConfig/for each LTM-CandidateConfig.

### <<Option 17>>

The UE may be provided/configured with RRC including information related to a power ramping-up value/power ramping counter for PRACH transmission for each candidate cell (per candidate cell), by part of a configuration different from LTM-CandidateConfig.

### <<Option 18>>

The UE does not expect operations of options 18-1 to 18-2 below.

### <Option 18-1>

A plurality of RACHs without RAR reception (without configured RAR reception) being in progress in parallel.

### <Option 18-2>

Receiving a PDCCH order including an indication of PRACH retransmission after a PDCCH order including a different candidate cell index.

According to options 15 to 18, the UE may use, in a higher layer parameter associated with a candidate cell index indicated by a PDCCH order, information related to a power ramping-up value/power ramping counter for PRACH transmission.

Next, options 19 to 21 will be described. Unlike options 15 to 18, options 19 to 21 correspond to a case where one higher layer parameter is configured to the UE (a case where a higher layer parameter common to candidate cells is configured). The higher layer parameter may be RRC including information related to a power ramping-up value/power ramping counter for PRACH transmission for one candidate cell, as in an existing manner.

### <<Option 19>>

The UE does not expect operations of options 19-1 to 19-2 below.

### <Option 19-1>

A plurality of RACHs without RAR reception (without configured RAR reception) being in progress in parallel.

### <Option 19-2>

Receiving a PDCCH order including an indication of PRACH retransmission after a PDCCH order including a different candidate cell index.

### <<Option 20>>

The PDCCH order may include information related to the number of retransmissions (the number to retransmit)/number of times of ramping up of power (the number to ramp up power). In this case, the UE does not require another PDCCH order for power ramping for one certain candidate cell.

### <<Option 21>>

The PDCCH order may include information related to a retransmission number/power ramping number, that is, information related a number indicating which retransmission/power ramping a retransmission/power ramping is. In this case, the UE can use PRACH transmission power computed by power ramping-up configured by a higher layer parameter.

### <<Specific Operation>>

FIG. 17 corresponds to the operations of options 15 to 18. As shown in FIG. 17, a source cell may transmit, to the UE, a PDCCH order for a certain candidate cell (for example, cell #2), for determination of power ramping.

The UE may refer to information in candidate configuration associated with a candidate cell index (cell #2) indicated by the received PDCCH order.

The UE may increment a count for the candidate cell index (cell #2) to perform power ramping of a PRACH.

Subsequently, the UE may transmit a PRACH for the certain candidate cell (for example, cell #2) to candidate cells.

FIG. 18 corresponds to the operation of option 20. As shown in FIG. 18, a source cell may transmit, to the UE, a PDCCH order for a certain candidate cell (for example, cell #2), for determination of power ramping.

The UE may acquire a retransmission number/power ramping number from the received PDCCH order.

Subsequently, the UE may transmit a plurality of PRACHs (in FIG. 18, three PRACHs) for the certain candidate cell (for example, cell #2) to candidate cells. In other words, the UE may transmit a PRACH to a candidate cell a plurality of times.

In this manner, the UE may perform PRACH retransmission, based on the number of retransmissions indicated by the PDCCH order. The UE may perform power ramping of a PRACH by referring to a configured parameter.

FIG. 19 corresponds to the operation of option 21. As shown in FIG. 19, a source cell may transmit, to the UE, a PDCCH order for a certain candidate cell (for example, cell #2), for determination of power ramping.

The UE may acquire a retransmission number from the received PDCCH order.

The UE may perform power ramping of a PRACH corresponding to the retransmission number.

Subsequently, the UE may transmit a PRACH for the certain candidate cell (for example, cell #2) to candidate cells.

FIG. 20 corresponds to the operations of options 18-1 and 19-1. As shown in FIG. 20, a source cell may transmit, to the UE, a PDCCH order for a certain candidate cell (for example, cell #2).

Here, the UE does not expect to receive a PDCCH order for a candidate cell (for example, cell #4) different from the certain candidate cell. In other words, the UE does not expect that a plurality of RACHs are in progress in parallel.

In this case, the UE may transmit a PRACH for the certain candidate cell (for example, cell #2) to candidate cells.

Subsequently, a source cell may transmit, to the UE, a PDCCH order for another candidate cell (for example, cell #4). In this case, the UE may receive a PDCCH order for such another candidate cell (for example, cell #4).

In this manner, the UE may expect to receive a PDCCH order for another candidate cell (for example, cell #4) after a previous PRACH (for example, for cell #2) is received by a NW (candidate cell).

FIG. 21 corresponds to the operations of options 18-2 and 19-2. As shown in FIG. 21, a source cell may transmit, to the UE, a PDCCH order for a certain candidate cell (for example, cell #2). The UE may transmit a PRACH for the certain candidate cell (for example, cell #2) to candidate cells.

Here, when the candidate cells have failed to receive the PRACH, the source cell may transmit, to the UE, a PDCCH order for the certain candidate cell (for example, cell #2) for retransmission.

When the procedure above has been repeated, and the candidate cells have failed to receive the PRACH again, the source cell may transmit, to the UE, a PDCCH order for another candidate cell (for example, cell #4).

Here, the UE does not expect to receive a PDCCH order (for example, for cell #2) including an indication of PRACH retransmission after a PDCCH order for a candidate cell (for example, cell #4) different from the certain candidate cell (for example, cell #2).

### {Embodiment 1-4}

Embodiment 1-4 is based on explicit indication of a PDCCH order. For example, the UE may determine to perform the power ramping, based on the PDCCH order explicitly indicating whether a PRACH is an initial transmission/retransmission.

The UE may determine to perform the power ramping, based on a time difference between a previous PDCCH order and the PDCCH order. For example, the UE may perform (may determine to perform) the power ramping when receiving the PDCCH order within a certain time after receiving the previous PDCCH order. The UE may not perform (may determine not to perform) the power ramping when not receiving the PDCCH order within the certain time after receiving the previous PDCCH order.

The above-described certain time may be, for example, an absolute time/slot(s)/symbol(s).

The PDCCH order may include at least one of the same RO, candidate cell ID, and SS/PBCH block index as that of the previous PDCCH order.

The UE may be configured with a specific higher layer parameter (for example, RRC) related to power ramping, for each cell or in common for cells. Hereinafter, options 22 to 28 depending on configured higher layer parameter(s) may be applied. The options may be applied in combination as appropriate.

First, options 22 to 25 will be described. Options 22 to 25 correspond to a case where a plurality of higher layer parameters are configured to the UE (a case where a higher layer parameter is configured for each candidate cell). The plurality of higher layer parameters may be RRC including information related to a power ramping-up value/power ramping counter for PRACH transmission for each candidate cell (per candidate cell) (for example, powerRampingStep, PREAMBLE_POWER_RAMPING_COUNTER). The RRC may be a higher layer parameter related to RACH configuration (for example, RACH-ConfigGeneric/RACH-ConfigGenericTwoStepRA).

### <<Option 22>>

The UE may be provided/configured with RRC including information related to a power ramping-up value/power ramping counter for PRACH transmission for each candidate cell (per candidate cell), by part of ServingCellConfig.

### <<Option 23>>

The UE may be provided/configured with RRC including information related to a power ramping-up value/power ramping counter for PRACH transmission for each candidate cell (per candidate cell), by part of LTM-CandidateConfig/for each LTM-CandidateConfig.

### <<Option 24>>

The UE may be provided/configured with RRC including information related to a power ramping-up value/power ramping counter for PRACH transmission for each candidate cell (per candidate cell), by part of a configuration different from LTM-CandidateConfig.

### <<Option 25>>

The UE does not expect operations of options 25-1 to 25-2 below.

### <Option 25-1>

A plurality of RACHs without RAR reception (without configured RAR reception) being in progress in parallel.

### <Option 25-2>

Receiving a PDCCH order including an indication of PRACH retransmission after a PDCCH order including a different candidate cell index.

According to options 22 to 25, the UE may use, in a higher layer parameter associated with a candidate cell index indicated by a PDCCH order, information related to a power ramping-up value/power ramping counter for PRACH transmission.

Next, options 26 to 28 will be described. Unlike options 22 to 25, options 26 to 28 correspond to a case where one higher layer parameter is configured to the UE (a case where a higher layer parameter common to candidate cells is configured). The higher layer parameter may be RRC including information related to a power ramping-up value/power ramping counter for PRACH transmission for one candidate cell, as in an existing manner.

### <<Option 26>>

The UE does not expect operations of options 26-1 to 26-2 below.

### <Option 26-1>

A plurality of RACHs without RAR reception (without configured RAR reception) being in progress in parallel.

### <Option 26-2>

Receiving a PDCCH order including an indication of PRACH retransmission after a PDCCH order including a different candidate cell index.

### <<Option 27>>

A PDCCH order may include information related to the number of retransmissions (the number to retransmit)/number of times of ramping up of power (the number to ramp up power). In this case, the UE does not require another PDCCH order for power ramping for one certain candidate cell.

### <<Option 28>>

The PDCCH order may include information related to a retransmission number/power ramping number, that is, information related a number indicating which retransmission/power ramping a retransmission/power ramping is. In this case, the UE can use PRACH transmission power computed by power ramping-up configured by a higher layer parameter.

According to the first embodiment described above, the UE can appropriately determine to perform power ramping, based on a PDCCH order.

### <<Specific Operation>>

FIG. 17 corresponds to the operations of options 22 to 25. As shown in FIG. 17, a source cell may transmit, to the UE, a PDCCH order for a certain candidate cell (for example, cell #2), for determination of power ramping.

The UE may refer to information in candidate configuration associated with a candidate cell index (cell #2) indicated by the received PDCCH order.

The UE may increment a count for the candidate cell index (cell #2) to perform power ramping of a PRACH.

Subsequently, the UE may transmit a PRACH for the certain candidate cell (for example, cell #2) to candidate cells.

FIG. 18 corresponds to the operation of option 27. As shown in FIG. 18, a source cell may transmit, to the UE, a PDCCH order for a certain candidate cell (for example, cell #2), for determination of power ramping.

The UE may acquire a retransmission number/power ramping number from the received PDCCH order.

Subsequently, the UE may transmit a plurality of PRACHs (in FIG. 18, three PRACHs) for the certain candidate cell (for example, cell #2) to candidate cells. In other words, the UE may transmit a PRACH to a candidate cell a plurality of times.

In this manner, the UE may perform PRACH retransmission, based on the number of retransmissions indicated by the PDCCH order. The UE may perform power ramping of a PRACH by referring to a configured parameter.

FIG. 19 corresponds to the operation of option 28. As shown in FIG. 19, a source cell may transmit, to the UE, a PDCCH order for a certain candidate cell (for example, cell #2), for determination of power ramping.

The UE may acquire a retransmission number from the received PDCCH order.

The UE may perform power ramping of a PRACH corresponding to the retransmission number.

Subsequently, the UE may transmit a PRACH for the certain candidate cell (for example, cell #2) to candidate cells.

FIG. 20 corresponds to the operations of options 25-1 and 26-1. As shown in FIG. 20, a source cell may transmit, to the UE, a PDCCH order for a certain candidate cell (for example, cell #2).

Here, the UE does not expect to receive a PDCCH order for a candidate cell (for example, cell #4) different from the certain candidate cell. In other words, the UE does not expect that a plurality of RACHs are in progress in parallel.

In this case, the UE may transmit a PRACH for the certain candidate cell (for example, cell #2) to candidate cells.

Subsequently, a source cell may transmit, to the UE, a PDCCH order for another candidate cell (for example, cell #4). In this case, the UE may receive a PDCCH order for such another candidate cell (for example, cell #4).

In this manner, the UE may expect to receive a PDCCH order for another candidate cell (for example, cell #4) after a previous PRACH (for example, for cell #2) is received by a NW (candidate cell).

FIG. 21 corresponds to the operations of options 25-2 and 26-2. As shown in FIG. 21, a source cell may transmit, to the UE, a PDCCH order for a certain candidate cell (for example, cell #2). The UE may transmit a PRACH for the certain candidate cell (for example, cell #2) to candidate cells.

Here, when the candidate cells have failed to receive the PRACH, the source cell may transmit, to the UE, a PDCCH order for the certain candidate cell (for example, cell #2) for retransmission.

When the procedure above has been repeated, and the candidate cells have failed to receive the PRACH again, the source cell may transmit, to the UE, a PDCCH order for another candidate cell (for example, cell #4).

Here, the UE does not expect to receive a PDCCH order (for example, for cell #2) including an indication of PRACH retransmission after a PDCCH order for a candidate cell (for example, cell #4) different from the certain candidate cell (for example, cell #2).

### <Second Embodiment>

A second embodiment describes RRC configuration, PDCCH order indication, and UE operation associated with power ramping.

### <<Option 1>>

A UE may be configured with one power ramping value for each candidate cell, by higher layer signaling. Alternatively, the UE may be configured with a power ramping value capable of being used in common for all candidate cells, by higher layer signaling.

The UE may determine whether to apply the configured power ramping value, based on, for example, 1-bit information explicitly indicating whether a PRACH is an initial transmission/retransmission.

### <<Option 2>>

The UE may be configured with a plurality of power ramping values (for example, four values of 2 dB, 3 dB, 4 dB, and 5 dB) for each candidate cell, by higher layer signaling. Alternatively, the UE may be configured with a plurality of power ramping values capable of being used in common for all candidate cells, by higher layer signaling.

The UE may be indicated with a plurality of power ramping values to be applied in an indicated PRACH procedure, by DCI (for example, DCI format 1_0) of a PDCCH order. In other words, the DCI may additionally indicate, in addition to the 1-bit information explicitly indicating an initial transmission/retransmission, a plurality of power ramping values (for example, 2-bit information indicating four values) to be applied in an indicated PRACH procedure. In other words, the PDCCH order (DCI format 1_0) may include, as information for indicating power ramping, at least the above-described information of a total of three bits.

### <<Option 3>>

The UE may be configured with a plurality of power ramping values (including a value of 0) for each candidate cell, by higher layer signaling. Alternatively, the UE may be configured with a plurality of power ramping values (including a value of 0) capable of being used in common for all candidate cells, by higher layer signaling.

As the plurality of power ramping values, four values of 0 dB, 2 dB, 4 dB, and 6 dB may be indicated by 2-bit information, for example.

The UE may be indicated with a plurality of power ramping values to be applied in an indicated PRACH procedure, by DCI (for example, DCI format 1_0) of a PDCCH order. In this case, the DCI may indicate a plurality of power ramping values by 2-bit information including information explicitly indicating an initial transmission/retransmission of a PRACH.

### <<Option 4>>

The UE may be configured with a plurality of numbers of retransmissions/counter numbers (for example, four values) for each candidate cell, by higher layer signaling. Alternatively, the UE may be configured with a plurality of numbers of retransmissions (power ramping numbers)/counter numbers capable of being used in common for all candidate cells, by higher layer signaling. The higher layer signaling may include a configuration related to a power ramping step for each number/counter number.

The UE may be indicated with power ramping numbers/counter numbers to be applied in an indicated PRACH procedure, by DCI (for example, DCI format 1_0) of a PDCCH order. In other words, the DCI may additionally indicate, in addition to the 1-bit information explicitly indicating an initial transmission/retransmission, power ramping numbers/counter numbers (for example, 2-bit information indicating four values) to be applied in an indicated PRACH procedure. In other words, the PDCCH order (DCI format 1_0) may include, as information for indicating power ramping, at least the above-described information of a total of three bits.

The UE may compute a power ramping value to be applied, based on the indicated power ramping numbers/counter numbers and a power ramping step configured for each of the power ramping numbers/counter numbers.

### <<Option 5>>

The UE may be configured with a plurality of numbers of retransmissions (power ramping numbers)/counter numbers (including a value of 1) for each candidate cell, by higher layer signaling. Alternatively, the UE may be configured with a plurality of numbers of retransmissions (power ramping numbers)/counter numbers (including a value of 1) capable of being used in common for all candidate cells, by higher layer signaling. The higher layer signaling may include, in addition to the information explicitly indicating an initial transmission/retransmission of a PRACH, a configuration related to a power ramping step for each number/counter number.

The UE may be indicated with power ramping numbers/counter numbers to be applied in an indicated PRACH procedure, by DCI (for example, DCI format 1_0) of a PDCCH order. In other words, the DCI may include information explicitly indicating an initial transmission/retransmission and information indicating power ramping numbers/counter numbers to be applied in an indicated PRACH procedure (for example, information of a total of two bits).

The UE may compute a power ramping value to be applied, based on the indicated power ramping numbers/counter numbers and a power ramping step configured for each of the power ramping numbers/counter numbers.

According to the second embodiment described above, the UE can appropriately control power ramping.

### <Third Embodiment>

A third embodiment relates to reset of a power ramping counter.

### {Analysis}

Regarding a condition related to reset of the power ramping counter, according to a current specification, PREAMBLE_POWER_RAMPING_COUNTER is always set to 1 even in a case where a PDCCH ordered RACH without RAR is initiated on a serving cell configured as a candidate cell.

For example, in a random access procedure, a UE may perform the following operations, based on specific variables.

When the random access procedure is initiated on a serving cell or an LTM candidate cell, a MAC entity is required to perform the following.
1> flush a MSG3 buffer;
1> flush a MSGA buffer;
1> set PREAMBLE_TRANSMISSION_COUNTER to 1;
1> when the random access procedure is initiated on a serving cell; or
1> when the random access procedure is initiated by a PDCCH order for an LTM candidate cell, and the PDCCH order indicates an initial preamble transmission; or
1> when the random access procedure is initiated by a PDCCH order for an LTM candidate cell, and the PDCCH order is different from that for the last random access preamble transmission and indicates a preamble retransmission:
   2> set PREAMBLE_POWER_RAMPING_COUNTER to 1.

Incidentally, for CFRA power control based on a PDCCH order in LTM, the following is under study.
- When the UE receives a PDCCH order indicating a retransmission of a PRACH including the same associated SSB and the same candidate cell as those of the last PRACH, the power ramping counter is incremented by one.
- The power ramping counter is reset in the following case in addition to case 1.
- Case 2: A case where the candidate cell indicated in the PDCCH order indicating the retransmission is different from a candidate cell indicated in the last PDCCH order.
- Here, an initial counter before the reception of the PDCCH order is 0.

For the CFRA power control based on the PDCCH order in the LTM, the UE can store one power ramping counter only. In this case, at least when the UE receives a PDCCH order indicating an initial PRACH transmission, the power ramping counter is reset.

In the LTM, there is a possibility that a target PCell/SCell is a current SCell/PCell. Accordingly, the current SCell/PCell can be configured as a candidate cell. Furthermore, in LTM of Rel. 18, candidate cells include a current serving cell, and thus it is necessary to increase or reset the power ramping counter as described above.

Thus, in the present embodiment, an example of description of a specification related to operation for handling the power ramping counter is proposed as follows.

### {Embodiment 3-1}

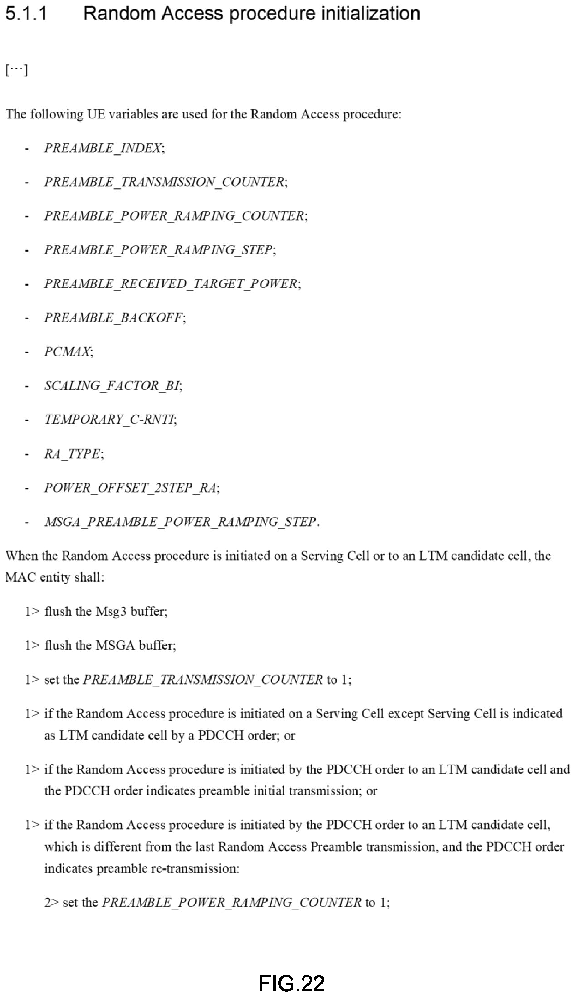

FIG. 22 is an example of description of a specification related to random access procedure initialization according to the third embodiment.

As shown in FIG. 22, the UE may use, in the random access procedure, the following UE variables.
- PREAMBLE_INDEX;
- PREAMBLE_TRANSMISSION_COUNTER;
- PREAMBLE_POWER_RAMPING_COUNTER;
- PREAMBLE_POWER_RAMPING_STEP;
- PREAMBLE_RECEIVED_TARGET_POWER;
- PREAMBLE_BACKOFF;
- PCMAX;
- SCALING_FACTOR_BI;
- TEMPORARY_C-RNTI;
- RA_TYPE;
- POWER_OFFSET_2STEP_RA; and
- MSGA_PREAMBLE_POWER_RAMPING_STEP.

For example, in a random access procedure, the UE may perform the following operations, based on the above-described variables.

When the random access procedure is initiated on a serving cell or an LTM candidate cell, a MAC entity is required to perform the following.
1> flush a MSG3 buffer;
1> flush a MSGA buffer;
1> set PREAMBLE_TRANSMISSION_COUNTER to 1;
1> when the random access procedure is initiated on a serving cell (except when the serving cell is indicated as an LTM candidate cell by a PDCCH order); or
1> when the random access procedure is initiated by a PDCCH order for an LTM candidate cell, and the PDCCH order indicates an initial preamble transmission; or
1> when the random access procedure is initiated by a PDCCH order for an LTM candidate cell, and the PDCCH order is different from that for the last random access preamble transmission and indicates a preamble retransmission:
   2> set PREAMBLE_POWER_RAMPING_COUNTER to 1.

With this, reset of the power ramping counter can be appropriately controlled in consideration of LTM candidate cells.

### {Variations}

In the present disclosure, the above-described "except when the serving cell is indicated as an LTM candidate cell by a PDCCH order" may be used interchangeably with the following description, and vice versa.
- Except when a RACH procedure is triggered by a PDCCH order indicating an LTM candidate cell index
- Except a RACH triggered by a PDCCH order indicating a non-zero cell indicator

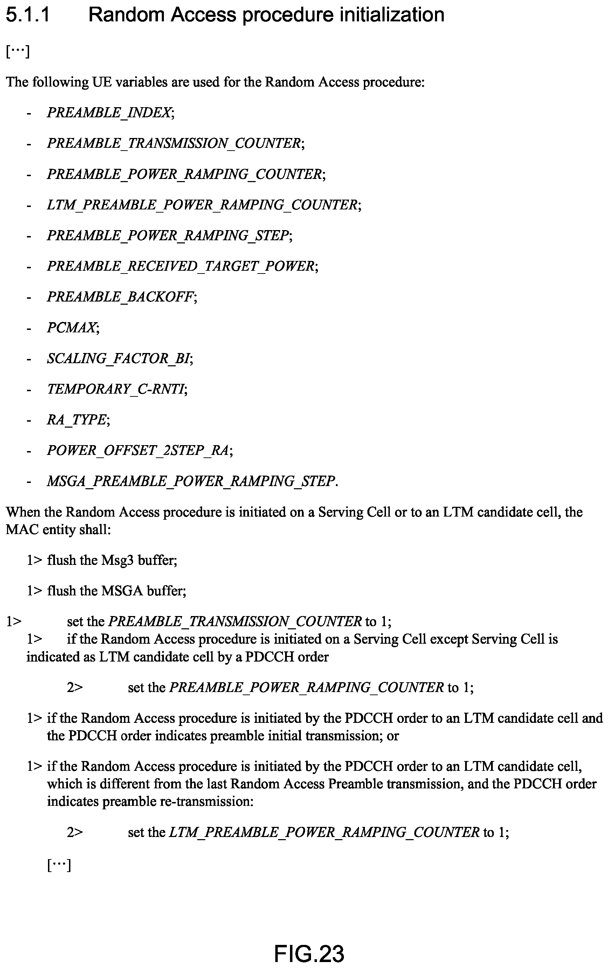

FIG. 23 is another example of the description of the specification related to random access procedure initialization according to the third embodiment.

As shown in FIG. 23, the UE may use, in the random access procedure, the following UE variables.
- PREAMBLE_INDEX;
- PREAMBLE_TRANSMISSION_COUNTER;
- PREAMBLE_POWER_RAMPING_COUNTER;
- LTM_PREAMBLE_POWER_RAMPING_COUNTER;
- PREAMBLE_POWER_RAMPING_STEP;
- PREAMBLE_RECEIVED_TARGET_POWER;
- PREAMBLE_BACKOFF;
- PCMAX;
- SCALING_FACTOR_BI;
- TEMPORARY_C-RNTI;
- RA_TYPE;
- POWER_OFFSET_2STEP_RA; and
- MSGA_PREAMBLE_POWER_RAMPING_STEP.

Here, LTM_PREAMBLE_POWER_RAMPING_COUNTER may mean a preamble power ramping counter for LTM.

For example, in a random access procedure, the UE may perform the following operations, based on the above-described variables.

When the random access procedure is initiated on a serving cell or an LTM candidate cell, a MAC entity is required to perform the following.
1> flush a MSG3 buffer;
1> flush a MSGA buffer;
1> set PREAMBLE_TRANSMISSION_COUNTER to 1;
1> when the random access procedure is initiated on a serving cell (except when the serving cell is indicated as an LTM candidate cell by a PDCCH order); or
1> when the random access procedure is initiated by a PDCCH order for an LTM candidate cell, and the PDCCH order indicates an initial preamble transmission; or
1> when the random access procedure is initiated by a PDCCH order for an LTM candidate cell, and the PDCCH order is different from that for the last random access preamble transmission and indicates a preamble retransmission:
   2> set PREAMBLE_POWER_RAMPING_COUNTER to 1.
1> when the random access procedure is initiated by a PDCCH order for an LTM candidate cell, and the PDCCH order indicates an initial preamble transmission; or
1> when the random access procedure is initiated by a PDCCH order for an LTM candidate cell, and the PDCCH order is different from that for the last random access preamble transmission and indicates a preamble retransmission:
   2> set LTM_PREAMBLE_POWER_RAMPING_COUNTER to 1.

According to the third embodiment described above, the UE can appropriately control a power ramping counter, based on a specific variable.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability. Note that "supporting" and "whether to support" may be used interchangeably.

The specific UE capability may indicate at least one of the following:
- supporting of specific processing/operation/control/information for at least one of the embodiments above
- supporting of two TAs for multi-TRP
- supporting of two TAs for intra-cell multi-TRP (for example, intra-cell M-TRP)
- supporting of two TAs for inter-cell multi-TRP (for example, inter-cell M-TRP)
- supporting of L1/L2 inter-cell mobility (for example, L1/L2 inter-cell mobility)
- supporting of PDCCH monitoring for a candidate cell/inactive candidate cell/inactive SCell
- supporting of a maximum number of cells/TAGs/reference CCs to be a target of PDCCH monitoring
- supporting of a cross-carrier (cross-CC) PDCCH order
- supporting of an existing PDCCH ordered RACH and a PDCCH ordered RACH for LTM
- supporting of a PDCCH ordered RACH with/without RAR

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of LTM, any RRC parameter for a specific release (for example, Rel. 18/19), or the like.

When the UE does not support at least one of the specific UE capabilities above or is not configured with the specific information, operation of Rel. 15/16/17 may be applied, for example.

### (Supplementary Notes)

Regarding one embodiment (third embodiment) of the present disclosure, the following supplementary notes of the invention will be given.

### {Supplementary Note 1}

A terminal including:
a receiving section that receives a downlink control channel (PDCCH) order for a certain candidate cell; and
a control section that determines, based on the PDCCH order, to perform power ramping for random access channel (PRACH) transmission, wherein
the control section sets a preamble power ramping counter to 1 except when the PDCCH order indicates a serving cell as a candidate cell for L1/L2 inter-cell mobility (LTM).

### {Supplementary Note 2}

The terminal according to supplementary note 1, wherein the control section sets the preamble power ramping counter to 1 when a random access procedure is initiated on a serving cell.

### {Supplementary Note 3}

The terminal according to supplementary note 1 or 2, wherein the control section sets the preamble power ramping counter to 1 except when a random access procedure is triggered by a PDCCH order indicating an index of the LTM candidate cell or except in a random access procedure triggered by the PDCCH order indicating a non-zero cell indicator.

### {Supplementary Note 4}

The terminal according to any one of supplementary notes 1 to 3, wherein the control section sets the preamble power ramping counter for LTM to 1 when a random access procedure is initiated by a PDCCH order for an LTM candidate cell, and the PDCCH order indicates an initial transmission or a retransmission of a preamble.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

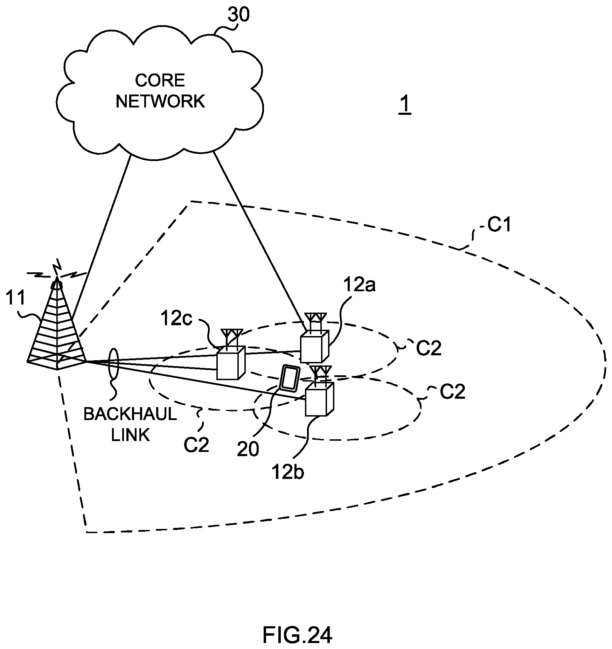

FIG. 24 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10", unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor", and the base station 12 corresponding to a relay station (relay) may be referred to as an "IAB node".

The base station 10 may be connected to a core network 30 through another base station 10 or directly. For example, the core network 30 may include at least one of Evolved Packet Core (EPC), 5G Core Network (5GCN), Next Generation Core (NGC), and the like.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform". Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment", "DL DCI", and so on, and DCI for scheduling the PUSCH may be referred to as "UL grant", "UL DCI", and so on. Note that the PDSCH may be used interchangeably with "DL data", and the PUSCH may be used interchangeably with "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set". Note that a "search space", a "search space set", a "search space configuration", a "search space set configuration", a "CORESET", a "CORESET configuration" and so on of the present disclosure may be used interchangeably.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link". In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block", an "SS Block (SSB)", and so on. Note that an SS, an SSB, and so on may be referred to as a "reference signal".

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)".

### (Base Station)

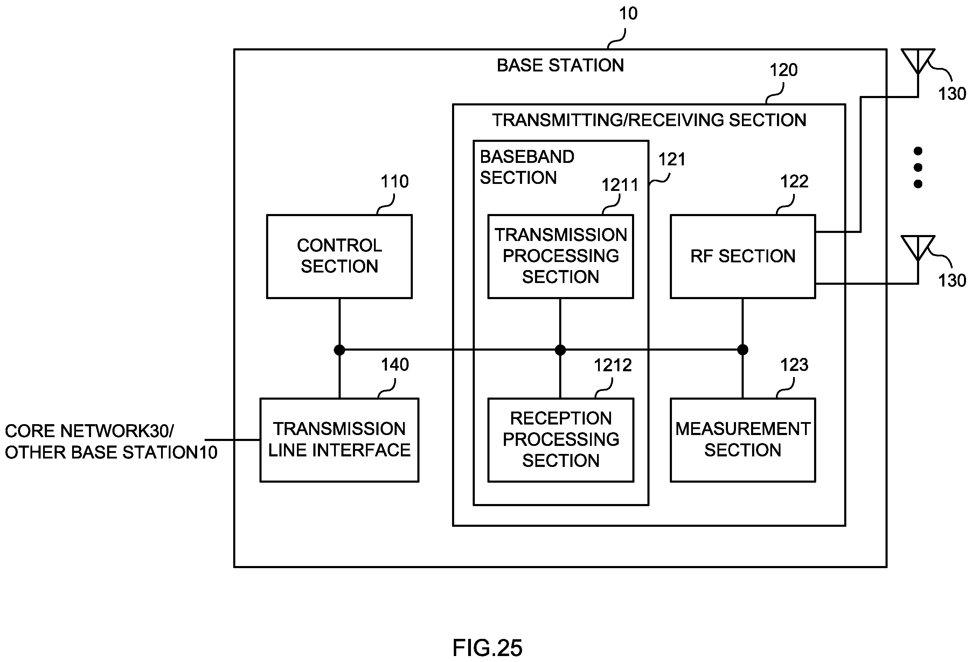

FIG. 25 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit a downlink control channel (PDCCH) order for a certain candidate cell. The control section 110 may control transmission of the PDCCH order for a terminal to determine to perform of power ramping for random access channel (PRACH) transmission.

### (User Terminal)

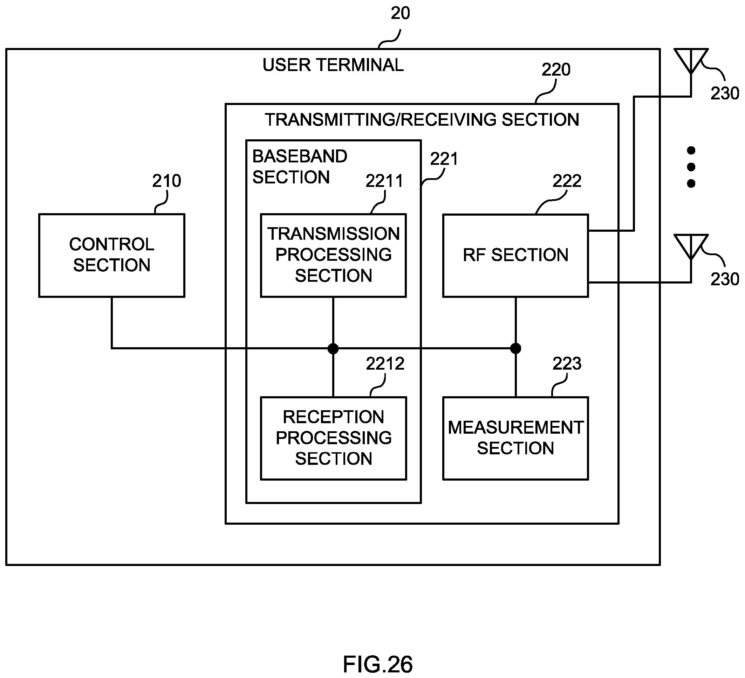

FIG. 26 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be used interchangeably with zero power (ZP) CSI-RS. Note that, in the present disclosure, the CSI-RS, the NZP CSI-RS, the ZP CSI-RS, the CSI-IM, a CSI-SSB, and the like may be used interchangeably.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a downlink control channel (PDCCH) order for a certain candidate cell. The control section 210 may determine, based on the PDCCH order, to perform power ramping for random access channel (PRACH) transmission. The control section 210 may set a preamble power ramping counter to 1 except when the PDCCH order indicates a serving cell as a candidate cell for L1/L2 inter-cell mobility (LTM). The control section 210 may set the preamble power ramping counter to 1 when a random access procedure is initiated on a serving cell. The control section 210 may set the preamble power ramping counter to 1 except when a random access procedure is triggered by a PDCCH order indicating an index of the LTM candidate cell or except in a random access procedure triggered by the PDCCH order indicating a non-zero cell indicator. The control section 210 may set the preamble power ramping counter for LTM to 1 when a random access procedure is initiated by a PDCCH order for an LTM candidate cell, and the PDCCH order indicates an initial transmission or a retransmission of a preamble.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

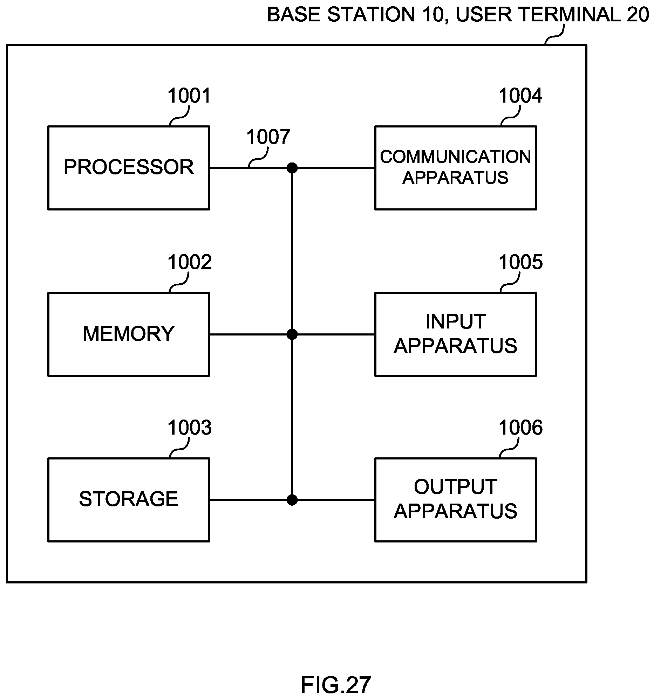

For example, a base station, a user terminal, and so on according to one embodiment of the present disclosure may function as a computer that executes the processes of the radio communication method of the present disclosure. FIG. 27 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station", a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, an artificial satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an autonomous car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

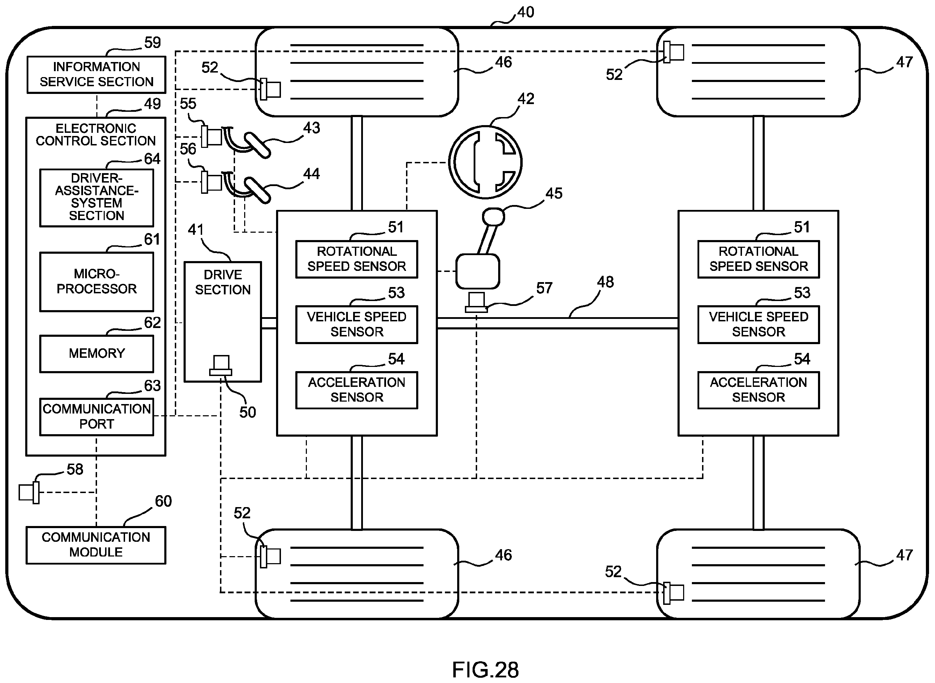

FIG. 28 is a diagram to show an example of a vehicle according to one embodiment. A vehicle 40 includes a drive section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The drive section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driver-assistance-system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driver-assistance-system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the drive section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, intervehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the drive section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

This application is based on and claims priority to Japanese Patent Application No. 2023-175100, filed on October 10, 2023, the contents of which are incorporated herein by reference in their entirety.

## Claims

1. A terminal comprising:
a receiving section that receives a downlink control channel (PDCCH) order for a certain candidate cell; and
a control section that determines, based on the PDCCH order, to perform power ramping for random access channel (PRACH) transmission, wherein
the control section sets a preamble power ramping counter to 1 except when the PDCCH order indicates a serving cell as a candidate cell for L1/L2 inter-cell mobility (LTM).

2. The terminal according to claim 1, wherein
the control section sets the preamble power ramping counter to 1 when a random access procedure is initiated on a serving cell.

3. The terminal according to claim 1, wherein
the control section sets the preamble power ramping counter to 1 except when a random access procedure is triggered by a PDCCH order indicating an index of the LTM candidate cell or except in a random access procedure triggered by the PDCCH order indicating a non-zero cell indicator.

4. The terminal according to claim 1, wherein
the control section sets the preamble power ramping counter for LTM to 1 when a random access procedure is initiated by a PDCCH order for an LTM candidate cell, and the PDCCH order indicates an initial transmission or a retransmission of a preamble.

5. A radio communication method for a terminal, the radio communication method comprising:
receiving a downlink control channel (PDCCH) order for a certain candidate cell; and
determining, based on the PDCCH order, to perform power ramping for random access channel (PRACH) transmission, wherein
the terminal sets a preamble power ramping counter to 1 except when the PDCCH order indicates a serving cell as a candidate cell for L1/L2 inter-cell mobility (LTM).

6. A base station comprising:
a transmitting section that transmits a downlink control channel (PDCCH) order for a certain candidate cell; and
a control section that controls transmission of the PDCCH order for a terminal to determine to perform power ramping for random access channel (PRACH) transmission, wherein
the terminal sets a preamble power ramping counter to 1 except when the PDCCH order indicates a serving cell as a candidate cell for L1/L2 inter-cell mobility (LTM).
